# EUROPÄISCHE PATENTSCHRIFT

(11) **EP 1 724 486 B1**
(45) Veröffentlichungstag und Bekanntmachung des Hinweises auf die Patenterteilung: **12.03.2008**
(21) Anmeldenummer: 06009206.1
(22) Anmeldetag: 04.05.2006
(51) Int. Cl.: F16D 25/12

(54) **Hydraulisches Kupplungsbetätigungssystem**
Hydraulic clutch actuator system
Système d'actuation d'embrayage hydraulique

(30) Priorität: 20.05.2005 DE 102005023209
(43) Veröffentlichungstag der Anmeldung: 22.11.2006
(73) Patentinhaber: LuK Lamellen und Kupplungsbau Beteiligungs KG, 77815 Bühl (DE)
(72) Erfinder: Fraser, Leigh, CV22 7DA Bilton Rugby Warwickshire (GB); McNab, Neil, CV 35 9NB Wellesbourne Warwickshire (GB); Rouse, Paul Vincent, CV34 5DY Warwick Warwickshire (GB); Riemer, Peter, CV31 2HW Leamington Spa (GB); Lethbridge, James Antony, CV31 2 HZ Leamington Spa Warwickshire (GB); Cooper, Michael, CV32 7EJ Leamington Spa Warwickshire (GB); Harries, David Anthony, Banbury Oxfordshire (GB); Dyke, Melvin, CV35 9PU Wellesbourne Warwick (GB)

(56) Entgegenhaltungen:
- EP-A- 1 236 918
- EP-A- 1 367 283

## Beschreibung

Die Erfindung betrifft ein hydraulisches Kupplungsbetätigungssystem mit einer hydraulischen Kupplungsbetätigungseinrichtung, die mindestens einen Kupplungsgeberzylinder aufweist, der über eine Druckmediumsleitung mit einem Kupplungsnehmerzylinder in Verbindung steht, der dazu dient, eine Kupplungseinrichtung zu betätigen, wobei der Druck in der Druckmediumsleitung über mindestens eine Notöffnungsventileinrichtung entspannbar ist, um in einem Notfall ein Öffnen der Kupplungseinrichtung zu ermöglichen.

Das Dokument EP 1 236 918 offenbart ein Kupplungsbetätigungssystem im wessentlichen gemäss dem Oberbegriff des Anspruchs 1.

Bei den Kupplungseinrichtungen handelt es sich vorzugsweise um Reibungskupplungen. Das hydraulische Kupplungsbetätigungssystem wird auch als hydraulisches Ausrücksystem bezeichnet, das mindestens einen manuell oder automatisch betätigten Geberzylinder und mindestens einen eine Kupplungseinrichtung ausrückenden Nehmerzylinder umfasst. Bei so genannten zwangsweise zugedrückten Kupplungen ist im kraftfreien Zustand der Kupplung die Kupplung ausgerückt und der Reibeingriff zum Verbinden einer Kraftmaschine mit einem Getriebe erfolgt durch Betätigen und Halten des Nehmerzylinders unter Druck durch den Geberzylinder. Insbesondere für Doppelkupplungen, bei denen ein gemeinsames Eingangsteil auf zwei Ausgangsteile mit jeweils einer Getriebeeingangswelle verzweigt wird, ist diese Art der Betätigung der Kupplung vorteilhaft. Wenn beide oder eine der Kupplungsbetätigungseinrichtungen, die auch als Ausrückvorrichtungen bezeichnet werden, beispielsweise durch Druckmittelverlust ausfallen, so werden diese Kupplungen stets geöffnet und verblocken nicht das Getriebe, wie es beispielsweise bei gewöhnlichen im kraftfreien Zustand geschlossenen Kupplungen der Fall ist. Reibungskupplungen der genannten Art werden in der Regel neben manuell betätigten Getrieben in automatisierten Getrieben eingesetzt, beispielsweise in automatisierten Schaltgetrieben (ASG) oder Doppelkupplungsgetrieben (PSG), die im allgemeinen von einem Steuergerät angesteuert werden, wobei sowohl das Kuppeln als auch das Ein- und Auslegen der Gänge automatisiert betrieben werden. Fällt ein derartiges Steuergerät aus, dann kann es in Abhängigkeit der angewandten Steuerstrategie vorkommen, dass die Kupplungsstellung einer Kupplung beziehungsweise in einem Doppelkupplungsgetriebe beider Kupplungen eingefroren wird, und daher der Betrieb der Brennkraftmaschine unabhängig von der Getriebeausgangsdrehzahl und damit der Raddrehzahl nicht mehr steuerbar ist, das heißt, dass beispielsweise bei stehendem Fahrzeug ein Betrieb der Brennkraftmaschine zur Aufrechterhaltung von Nebenaggregaten nicht mehr möglich ist. Um zum Beispiel bei einem Ausfall der Getriebesteuerung das Trennen einer nicht geöffneten Kupplung zu ermöglichen, kann der Druck in der Druckmediumsleitung über eine Notöffnungsventileinrichtung entspannt werden.

Aufgabe der Erfindung ist es, ein einfaches und kostengünstiges hydraulisches Kupplungsbetätigungssystem mit einer hydraulischen Kupplungsbetätigungseinrichtung zu schaffen, die mindestens einen Kupplungsgeberzylinder aufweist, der über eine Druckmediumsleitung mit einem Kupplungsnehmerzylinder in Verbindung steht, der dazu dient, eine Kupplungseinrichtung zu betätigen, wobei der Druck in der Druckmediumsleitung über mindestens eine Notöffnungsventileinrichtung entspannbar ist, um in einem Notfall ein Öffnen der Kupplungseinrichtung zu ermöglichen.

Die Aufgabe ist bei einem hydraulischen Kupplungsbetätigungssystem mit einer hydraulischen Kupplungsbetätigungseinrichtung, die mindestens einen Kupplungsgeberzylinder aufweist, der über eine Druckmediumsleitung mit einem Kupplungsnehmerzylinder in Verbindung steht, der dazu dient, eine Kupplungseinrichtung zu betätigen, wobei der Druck in der Druckmediumsleitung über mindestens eine Notöffnungsventileinrichtung entspannbar ist, um in einem Notfall ein Öffnen der Kupplungseinrichtung zu ermöglichen, dadurch gelöst, dass die Notöffnungsventileinrichtung eine Dichtungsträgereinrichtung mit einem Dichtungselement umfasst, die mit Hilfe eines Elektromagneten aus einer Öffnungsstellung, in der eine Druckmediumseintrittsöffnung geöffnet ist, in eine Schließstellung bewegbar ist, in der das Dichtungselement die Druckmediumseintrittsöffnung verschließt. Vorzugsweise ist die Notöffnungsventileinrichtung in die Öffnungsstellung vorgespannt, um bei einem Ausfall des Elektromagneten eine Notöffnung zu gewährleisten. In einem Notfall öffnet die Notöffnungsventileinrichtung dann automatisch, um die Kupplungseinrichtung zu öffnen. In der Öffnungsstellung wird eine Verbindung zwischen der Druckmediumseintrittsöffnung und einer Stromentspannungsleitung freigegeben, die auch als Nachlaufleitung bezeichnet wird.

Ein bevorzugtes Ausführungsbeispiel des hydraulischen Kupplungsbetätigungssystems ist dadurch gekennzeichnet, dass die Dichtungsträgereinrichtung ein Sackloch aufweist, das zur Aufnahme des Dichtungselements dient und dessen Innendurchmesser größer als der Außendurchmesser einer Druckmediumseintrittsdüse ist. In der Schließstellung liegt das Dichtungselement an der Druckmediumseintrittsdüse an, um diese zu verschließen. In der Öffnungsstellung ist das Dichtungselement von der Druckmediumseintrittsdüse beabstandet, um eine Verbindung zwischen der Druckmediumsleitung und einer Druckentspannungsleitung freizugeben, die auch als Nachlaufleitung bezeichnet wird.

Ein weiteres bevorzugtes Ausführungsbeispiel des hydraulischen Kupplungsbetätigungssystems ist dadurch gekennzeichnet, dass die Dichtungsträgereinrichtung mit Hilfe eines Elektromagneten aus der Schließstellung in die Öffnungsstellung kippbar ist. Die Kippbewegung wird zum Beispiel durch einen Aktor des Elektromagneten bewirkt, der im Wesentlichen quer zu der Dichtungsträgereinrichtung bewegbar ist.

Ein weiteres bevorzugtes Ausführungsbeispiel des hydraulischen Kupplungsbetätigungssystems ist dadurch gekennzeichnet, dass in die Dichtungsträgereinrichtung eine Druckbegrenzungsventileinrichtung integriert ist. Durch die Druckbegrenzungsventileinrichtung wird gewährleistet, dass die Notöffnungsventileinrichtung automatisch öffnet, sobald ein vorgegebenes Druckniveau erreicht wird. Darüber hinaus kann die Notöffnungsventileinrichtung jederzeit über eine Unterbrechung der Bestromung des Elektromagneten geöffnet werden.

Ein weiteres bevorzugtes Ausführungsbeispiel des hydraulischen Kupplungsbetätigungssystems ist dadurch gekennzeichnet, dass zwischen der Dichtungsträgereinrichtung und dem Elektromagneten eine Gewindeeinrichtung angeordnet ist, mit der eine Drehbewegung des Elektromagneten in eine translatorische Bewegung der Dichtungsträgereinrichtung umgewandelt wird. Somit wird über die Drehbewegung des Elektromagneten das Dichtungselement beziehungsweise die Dichtungsträgereinrichtung aus der Öffnungsstellung in die Schließstellung bewegt und umgekehrt.

Ein weiteres bevorzugtes Ausführungsbeispiel des hydraulischen Kupplungsbetätigungssystems ist dadurch gekennzeichnet, dass die Dichtungsträgereinrichtung von einer Hebeleinrichtung gebildet wird. Bei diesem Ausführungsbeispiel wird die Hebelwirkung ausgenützt, um das Dichtungselement beziehungsweise die Dichtungsträgereinrichtung aus der Öffnungsstellung in die Schließstellung zu bewegen, und umgekehrt.

Ein weiteres bevorzugtes Ausführungsbeispiel des hydraulischen Kupplungsbetätigungssystems ist dadurch gekennzeichnet, dass die Dichtungsträgereinrichtung mit einer Hebeleinrichtung zusammenwirkt, die zwischen dem Elektromagneten und der Dichtungsträgereinrichtung wirksam ist. Bei diesem Ausführungsbeispiel ist eine zusätzliche Hebeleinrichtung vorgesehen, um die Dichtungsträgereinrichtung beziehungsweise das Dichtungselement aus der Öffnungsstellung in die Schließstellung zu bewegen, und umgekehrt.

Ein weiteres bevorzugtes Ausführungsbeispiel des hydraulischen Kupplungsbetätigungssystems ist dadurch gekennzeichnet, dass die Dichtungsträgereinrichtung mit einer Keileinrichtung zusammenwirkt, die zwischen dem Elektromagneten und der Dichtungsträgereinrichtung wirksam ist. Bei diesem Ausführungsbeispiel werden miteinander in Eingriff befindliche Keilflächen verwendet, um die Dichtungsträgereinrichtung beziehungsweise das Dichtungselement aus der Öffnungsstellung in die Schließstellung zu bewegen, und umgekehrt.

Ein weiteres bevorzugtes Ausführungsbeispiel des hydraulischen Kupplungsbetätigungssystems ist dadurch gekennzeichnet, dass die Dichtungsträgereinrichtung mit einer elastischen Kopplungseinrichtung zusammenwirkt, die zwischen dem Elektromagneten und der Dichtungsträgereinrichtung wirksam ist. Über die elastische Kopplungseinrichtung wird eine Bewegung des Elektromagneten beziehungsweise eines zu dem Elektromagneten gehörigen Aktors auf die Dichtungsträgereinrichtung übertragen.

Die Erfindung betrifft auch ein hydraulisches Kupplungsbetätigungssystem mit einer hydraulischen Kupplungsbetätigungseinrichtung, die einen ersten Kupplungsgeberzylinder, der über eine erste Druckmediumsleitung mit einem ersten Kupplungsnehmerzylinder in Verbindung steht, der dazu dient, eine erste Kupplungseinrichtung zu betätigen, und einen zweiten Kupplungsgeberzylinder umfasst, der über eine zweite Druckmediumsleitung mit einem zweiten Kupplungsnehmerzylinder in Verbindung steht, der dazu dient, eine zweite Kupplungseinrichtung zu betätigen, wobei der Druck in der ersten und/oder in der zweiten Druckmediumsleitung über mindestens eine vorab beschriebene Notöffnungsventileinrichtung entspannbar ist, um in einem Notfall ein Öffnen mindestens einer der Kupplungseinrichtungen zu ermöglichen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Antriebsstrangs eines Kraftfahrzeugs mit einem hydraulischen Kupplungsbetätigungssystem, das eine Notöffnungsventileinrichtung aufweist, die ein 4/2-Wegeventil umfasst;
- Fig. 2: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst;
- Fig. 3: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst, die mit unterschiedlichen Hydraulikspeichern in Verbindung stehen;
- Fig. 4: eine schematische Darstellung eines Antriebsstrangs eines Kraftfahrzeugs mit einem hydraulischen Kupplungsbetätigungssystem, das eine Notöffnungsventileinrichtung aufweist, die ein 4/2-Wegeventil umfasst, das mit einem einzigen Hydraulikspeicher in Verbindung steht;
- Fig. 5: eine schematische Darstellung eines Antriebsstrangs eines Kraftfahrzeugs mit einem hydraulischen Kupplungsbetätigungssystem, das eine Notöffnungsventileinrichtung aufweist, die zwei 2/2-Wegeventile umfasst, die jeweils mit einem Hydraulikspeicher in Verbindung stehen;
- Fig. 6: eine schematische Darstellung eines Antriebsstrangs eines Kraftfahrzeugs mit einem hydraulischen Kupplungsbetätigungssystem, das eine Notöffnungsventileinrichtung aufweist, die ein 2/2-Wegeventil umfasst, das einen gemeinsamen Anschluss für zwei Druckmediumsleitungen aufweist;
- Fig. 7: eine schematische Darstellung eines Antriebsstrangs eines Kraftfahrzeugs mit einem hydraulischen Kupplungsbetätigungssystem, das eine Notöffnungsventileinrichtung aufweist, die ein 2/2-Wegeventil umfasst, in das zwei Rückschlagventile integriert sind;
- Fig. 8: eine schematische Darstellung eines Antriebsstrangs eines Kraftfahrzeugs mit einem hydraulischen Kupplungsbetätigungssystem für eine einfache Kupplung, das eine Notöffnungsventileinrichtung aufweist, die ein 2/2-Wegeventil umfasst;
- Fig. 9: eine schematische Darstellung eines Antriebsstrangs eines Kraftfahrzeugs mit einem hydraulischen Kupplungsbetätigungssystem für eine einfache Kupplung, das eine Notöffnungsventileinrichtung aufweist, die ein 2/2-Wegeventil mit einem integrierten Rückschlagventil umfasst;
- Fig. 10: eine Schnittdarstellung einer Notöffnungsventileinrichtung mit einer hin und her bewegbaren Dichtungsträgereinrichtung;
- Fig. 11: einen vergrößerten Ausschnitt aus Figur 10;
- Fig. 12: einen vergrößerten Ausschnitt aus Figur 11;
- Fig. 13: eine Explosionsdarstellung der Einzelteile aus Figur 12;
- Fig. 14: eine vergrößerte Darstellung eines Dichtelements der in den Figuren 10 bis 13 dargestellten Notöffnungsventileinrichtung;
- Fig. 15: einen Ausschnitt einer Notöffnungsventileinrichtung mit einer Rückschlagkugel;
- Fig. 16: einen Ausschnitt einer Notöffnungsventileinrichtung mit einem O-Ring;
- Fig.17: einen Ausschnitt einer Notöffnungsventileinrichtung mit einem ringförmig erhabenen Bereich;
- Fig. 18: einen Ausschnitt einer ähnlich Notöffnungsventileinrichtung wie in Figur 17 mit zwei Druckmediumseintrittsöffnungen;
- Fig. 19: einen Ausschnitt einer Notöffnungsventileinrichtung mit einem abgeschrägten, erhabenen Bereich;
- Fig. 20: einen Ausschnitt einer Notöffnungsventileinrichtung mit einem stopfenartigen Verschluss;
- Fig. 21: eine ähnliche Notöffnungsventileinrichtung wie in Figur 10;
- Fig. 22: eine Seitenansicht der Notöffnungsventileinrichtung aus Figur 21;
- Fig. 23: eine ähnliche Notöffnungsventileinrichtung wie in den Figuren 10 und 21 mit zwei Druckmediumseintrittsdüsen;
- Fig. 24: eine Seitenansicht der Notöffnungsventileinrichtung aus Figur 23;
- Fig. 25: eine Variante der in Figur 23 dargestellten Notöffnungsventileinrichtung;
- Fig. 26: eine Notöffnungsventileinrichtung mit einem zwischen einer Dichtungsträgereinrichtung und einem Elektromagneten angeordneten Ventilkolben;
- Fig. 27: eine Notöffnungsventileinrichtung mit einer kippbaren Dichtungsträgereinrichtung;
- Fig. 28: eine ähnliche Notöffnungsventileinrichtung wie in den Figuren 10 und 21 mit einem integrierten Druckbegrenzungsventil;
- Fig. 29: eine Notöffnungsventileinrichtung mit einer Gewindeeinrichtung, die zwischen einer Dichtungsträgereinrichtung und einem Elektromagneten angeordnet ist;
- Fig. 30: eine Seitenansicht der Notöffnungsventileinrichtung aus Figur 29;
- Fig. 31: eine Notöffnungsventileinrichtung mit einer hebelartigen Dichtungsträgereinrichtung;
- Fig. 32: eine Explosionsdarstellung der in Figur 31 dargestellten Notöffnungsventileinrichtung;
- Fig. 33: eine Notöffnungsventileinrichtung mit einer Keileinrichtung zum Bewegen der Dichtungsträgereinrichtung;
- Fig. 34: eine Notöffnungsventileinrichtung mit einer Hebeleinrichtung, die mit einer Dichtungsträgereinrichtung zusammenwirkt, in der Draufsicht;
- Fig. 35: die Notöffnungsventileinrichtung aus Figur 34 in der Vorderansicht;
- Fig. 36: die Notöffnungsventileinrichtung aus den Figuren 34 und 35 in der Seitenansicht;
- Fig. 37: eine Notöffnungsventileinrichtung mit einer elastischen Kopplungseinrichtung;
- Fig. 38: eine Notöffnungsventileinrichtung mit zwei Schwenkarmen;
- Fig. 39: eine Notöffnungsventileinrichtung mit zwei aneinander angelenkten Schwenkarmen;
- Fig. 40: eine Notöffnungsventileinrichtung mit in rohrförmigen Kopplungselementen angeordneten Kugeln;
- Fig. 41: eine Notöffnungsventileinrichtung mit einer Kopplungsstange, die zwischen einem Aktor eines Elektromagneten und einem Kolben angeordnet ist, und
- Fig. 42: eine Variante der in Figur 41 dargestellten Notöffnungsventileinrichtung.

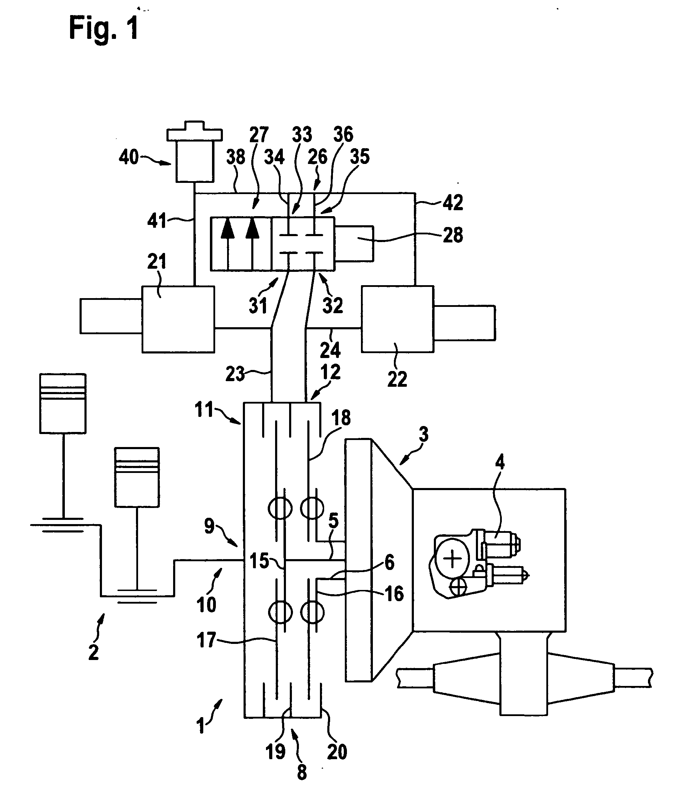

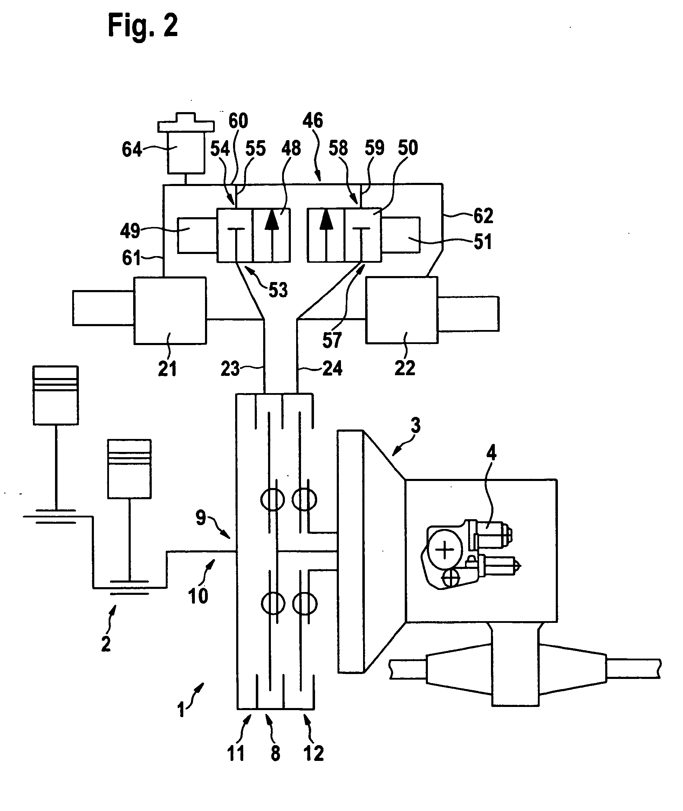

Die Figuren 1 bis 7 zeigen jeweils einen schematisch dargestellten Antriebsstrang 1 eines Kraftfahrzeugs. Aus Gründen der Übersichtlichkeit sind nur in Figur 1 alle Einzelteile des Antriebsstrangs mit Bezugszeichen versehen. In den Figuren 2 bis 7 sind zur Verbesserung der Lesbarkeit der Zeichnung nur die wesentlichen Bezugszeichen aufgeführt. Die folgende ausführliche Beschreibung der Figur 1 gilt auch für die Figuren 2 bis 7. Um Wiederholungen zu vermeiden, wird bei der ausführlichen Beschreibung der Figuren 2 bis 7 nicht die komplette Beschreibung des gesamten Antriebsstrangs wiederholt, sondern im Wesentlichen nur auf die Unterschiede zwischen den in den Figuren 1 bis 7 dargestellten Ausführungsbeispielen eingegangen.

In Figur 1 ist ein Antriebsstrang 1 eines Kraftfahrzeugs schematisch dargestellt. Der Antriebsstrang 1 umfasst eine Brennkraftmaschine 2, der ein Getriebe 3 nachgeordnet ist, das als Doppelkupplungsgetriebe mit zwei Getriebeeingangswellen 5, 6 ausgeführt ist. Im Kraftfluss zwischen der Brennkraftmaschine 2 und dem Getriebe 3 ist eine Doppelkupplung 8 mit einem Eingangsteil 9 angeordnet, das drehfest mit einer Kurbelwelle 10 der Brennkraftmaschine 2 verbunden ist. Die Doppelkupplung 8 umfasst eine erste Kupplungseinrichtung 11 und zweite Kupplungseinrichtung 12. Die beiden Kupplungseinrichtungen 11 und 12 sind vorzugsweise als Reibungskupplungen ausgebildet. Der Aufbau und die Funktion einer Doppelkupplung mit zwei Reibungskupplungen werden als bekannt vorausgesetzt.

Die Doppelkupplung 8 umfasst zwei Ausgangsteile 15, 16, die jeweils drehfest mit einer der Getriebeeingangswellen 5, 6 verbunden sind. Die Ausgangsteile 15,16 sind über Drehschwingungsdämpfungseinrichtungen jeweils mit einer Kupplungsscheibe 17, 18 gekoppelt. Die Kupplungsscheiben 17, 18 weisen Reibbeläge auf, die in Reibeingriff mit dem Eingangsteil 9 der Doppelkupplung 8 gebracht werden können.

Dazu weist das Eingangsteil 9 eine axial fest angeordnete Pressplatte mit beidseitig angeordneten Reibeingriffsflächen auf und ist mit jeweils für ein Ausgangsteil vorgesehenen, axial verlagerbaren und mit dem Eingangsteil 9 verbundenen Ringscheibenteilen 19, 20, die jeweils eine Reibeingriffsfläche aufweisen, drehfest verbunden. Durch Axialverlagerung der Ringscheibenteile 19, 20 wird der Reibeingriff zu den Reibflächen der Ausgangsteile 15, 16 beziehungsweise der Kupplungsscheiben 17, 18 hergestellt. Die Ringflächen sind im kraftfreien Zustand beispielsweise mittels Blattfedern so von der Anpressplatte beabstandet, dass kein Reibeingriff erfolgt, das heißt, dass beide den Ausgangsteilen 15, 16 zugeordneten Kupplungen 11,12 zugedrückte Kupplungen sind.

Die Kupplungen 11, 12 werden jeweils mit einer Axialverlagerung von Ausrückhebeln eingerückt. Dabei werden die Ausrückhebel mit Hilfe von Kupplungsbetätigungsvorrichtungen so lang in diesem Zustand gehalten, bis ein Ausrücken der Kupplung gewünscht ist. Für beide Kupplungen 11, 12 kann eine Nachstellvorrichtung vorgesehen sein, wobei auch eine einzige gemeinsame Nachstellvorrichtung auf beide Kupplungen wirken kann. Es versteht sich, dass im Sinne der Erfindung auch andere Kupplungsformen und Ausgestaltungen, wie beispielsweise zwangsweise zugezogene Kupplungen, vorteilhaft sein können.

Die beiden Reibungskupplungen 11, 12 werden durch Ausrückvorrichtungen betätigt, die jeweils mit einem Nehmerzylinder zusammenwirken, der zum Beispiel als konzentrisch um die Getriebeeingangswellen 5, 6 angeordneter Ringzylinder ausgeführt ist. Die Nehmerzylinder sind über Druckmediumsleitungen 23, 24 jeweils mit einem Geberzylinder 21, 22 verbunden. Die Geberzylinder 21, 22 werden zum Beispiel mittels jeweils eines elektrischen Aktors betätigt.

Je nach Bedarf, vorzugsweise in einem Notfall, kann der Druck in den Druckmediumsleitungen 23, 24 über eine Notöffnungsventileinrichtung 26 schnell abgebaut werden, die auch als Druckentspannungseinrichtung bezeichnet wird. Die Notöffnungsventileinrichtung 26 wird von außen beispielsweise durch den Fahrer angesteuert. Hierzu kann der Fahrer über eine Betätigungsvorrichtung verfügen, die zum Beispiel von einem Wählhebel zum Wählen von Betriebsprogrammen des Kraftfahrzeugs dargestellt werden kann.

Das Getriebe 3 wird beispielsweise mit Hilfe einer Getriebebetätigungseinrichtung 4 betätigt, die wiederum über ein Getriebesteuergerät gesteuert wird. Wenn in einer Notfallssituation das Getriebesteuergerät ausfällt, dann verbleiben die Geberzylinder 21, 22 in ihrer momentanen Position, wodurch die Kupplungen 11, 12 je nach Stellung der zugehörigen Betätigungsvorrichtungen in Reibeingriff bleiben. Um nun ein Abkoppeln der Brennkraftmaschine 2 von dem Getriebe 3 zu ermöglichen, wird vom Fahrer die Betätigungsvorrichtung für die Notöffnungsventileinrichtung 26 aktiviert und damit die Notöffnungsventileinrichtung 26 betätigt, so dass der in den Druckmediumsleitungen 23, 24 aufgebaute Druck abgebaut und die Kupplungen 11,12 geöffnet werden.

Die Notöffnungsventileinrichtung 26 umfasst in Figur 1 ein 4/2-Wegeventil 27, das mit Hilfe eines Elektromagneten 28 betätigt wird. Das 4/2-Wegeventil 27 umfasst einen Anschluss 31 für die Druckmediumsleitung 23 und einen Anschluss 32 für die Druckmediumsleitung 24. Auf der gegenüberliegenden Seite weist das 4/2-Wegeventil 27 einen Anschluss 33 für eine Druckentspannungsleitung 34 auf, die über das 4/2-Wegeventil 27 mit der Druckmediumsleitung 23 verbindbar ist. Außerdem weist das 4/2-Wegeventil 27 einen Anschluss 35 für eine Druckentspannungsleitung 36 auf, die über das 4/2-Wegeventil 27 mit der Druckmediumsleitung 24 verbindbar ist. In der in Figur 1 dargestellten Stellung des 4/2-Wegeventils 27 sind die Verbindungen zwischen den Druckmediumsleitungen 23, 24 und den Druckentspannungsleitungen 34, 36 unterbrochen. Wenn das 4/2-Wegeventil 27 in seine zweite (in Figur 1 nicht dargestellte Stellung umgeschaltet wird, dann wird jeweils eine Verbindung zwischen den Druckmediumsleitungen 23, 24 und den zugehörigen Druckentspannungsleitungen 34, 36 freigegeben, so dass der Druck in den Druckmediumsleitungen 23, 24 schnell abgebaut werden kann.

Die Druckentspannungsleitungen 34, 36 stehen über eine weitere Druckentspannungsleitung 38 mit einem Hydraulikspeicher 40 in Verbindung, der auch als Nachlaufbehälter bezeichnet wird und einen deutlich geringeren Druck aufweist als die Druckmediumsleitungen 23 und 24.

Der Hydraulikspeicher 40 steht des Weiteren über eine Verbindungsleitung 41, die auch als Nachlaufleitung bezeichnet wird, mit dem Geberzylinder 21 in Verbindung. Des Weiteren steht der Hydraulikspeicher 40 über eine Verbindungsleitung 42, die auch als Nachlaufleitung bezeichnet wird, mit dem Geberzylinder 22 in Verbindung.

Bei dem in Figur 2 dargestellten Ausführungsbeispiel umfasst das hydraulische Kupplungsbetätigungssystem eine Notöffnungsventileinrichtung 46 mit einem ersten 2/2-Wegeventil 48, das durch einen Elektromagneten 49 betätigbar ist, und mit einem zweiten 2/2-Wegeventil 50, das durch einen Elektromagneten 51 betätigbar ist. Das 2/2-Wegeventil 48 weist einen Anschluss 53 für die Druckmediumsleitung 23 auf. Auf der gegenüberliegenden Seite weist das 2/2-Wegeventil 48 einen Anschluss 54 für eine Druckentspannungsleitung 55 auf. In gleicher Weise weist das 2/2-Wegeventil 50 einen Anschluss 57 für die Druckmediumsleitung 24 auf. Auf der gegenüberliegenden Seite weist das 2/2-Wegeventil 50 einen Anschluss 58 für eine Druckentspannungsleitung 59 auf. Die Druckentspannungsleitungen 55 und 59 stehen über eine Verbindungsleitung 60 mit einem Hydraulikspeicher 64 in Verbindung. Der Hydraulikspeicher 64 steht über eine Verbindungsleitung 61, die auch als Nachlaufleitung bezeichnet wird, mit dem Geberzylinder 21 in Verbindung. Des Weiteren steht der Hydraulikspeicher 64 über die Verbindungsleitung 60 und eine Verbindungsleitung 62 mit dem Geberzylinder 22 in Verbindung.

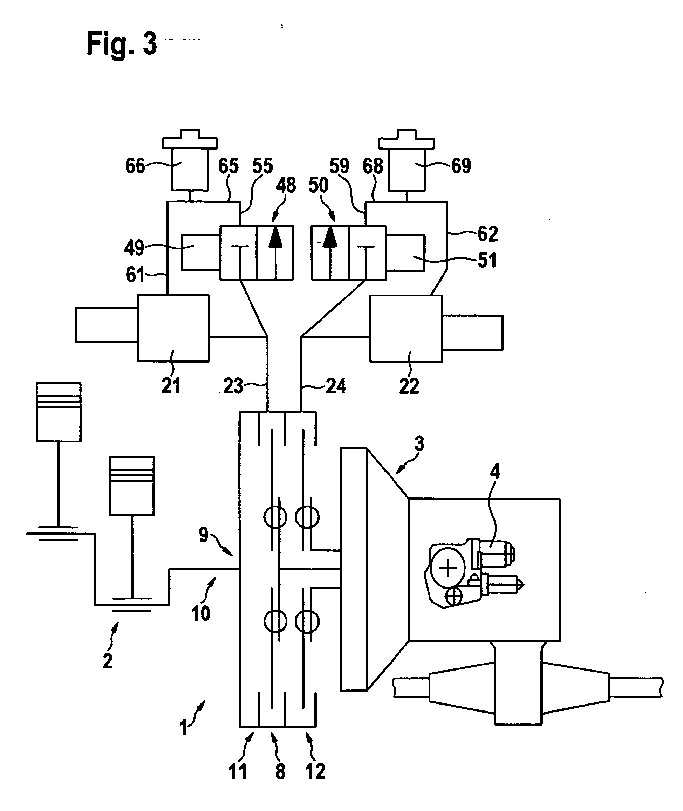

Bei dem in Figur 3 dargestellten hydraulischen Kupplungsbetätigungssystem ist das 2/2-Wegeventil 48 über die Druckentspannungsleitung 55 und eine Verbindungsleitung 65 an einen Hydraulikspeicher 66 angeschlossen, der über die Verbindungsleitung 61 auch mit dem Geberzylinder 21 in Verbindung steht. Das 2/2-Wegeventil 50 ist über die Druckentspannungsleitung 59 und eine Verbindungsleitung 68 an einen weiteren Hydraulikspeicher 69 angeschlossen, der über die Verbindungsleitung 62 mit dem Geberzylinder 22 in Verbindung steht.

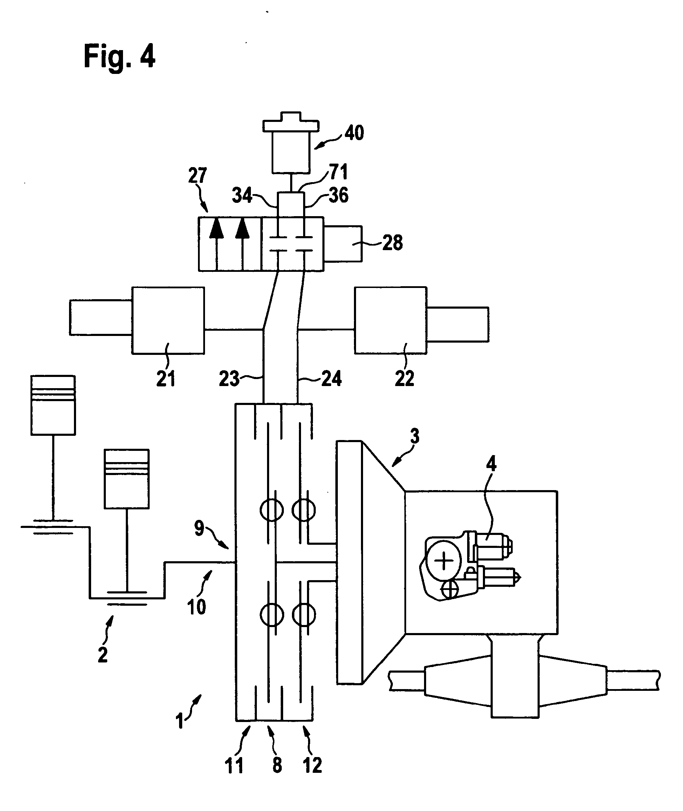

Das in Figur 4 dargestellte Ausführungsbeispiel ähnelt dem in Figur 1 dargestellten Ausführungsbeispiel. Das 4/2-Wegeventil 27 ist über die Druckentspannungsleitungen 34 und 36 und eine Verbindungsleitung 71 an den Hydraulikspeicher 40 angeschlossen. Allerdings steht der Hydraulikspeicher 40 bei dem in Figur 4 dargestellten Ausführungsbeispiel nicht über Verbindungsleitungen (41 und 42 in Figur 1) mit den Geberzylindern 21 und 22 in Verbindung.

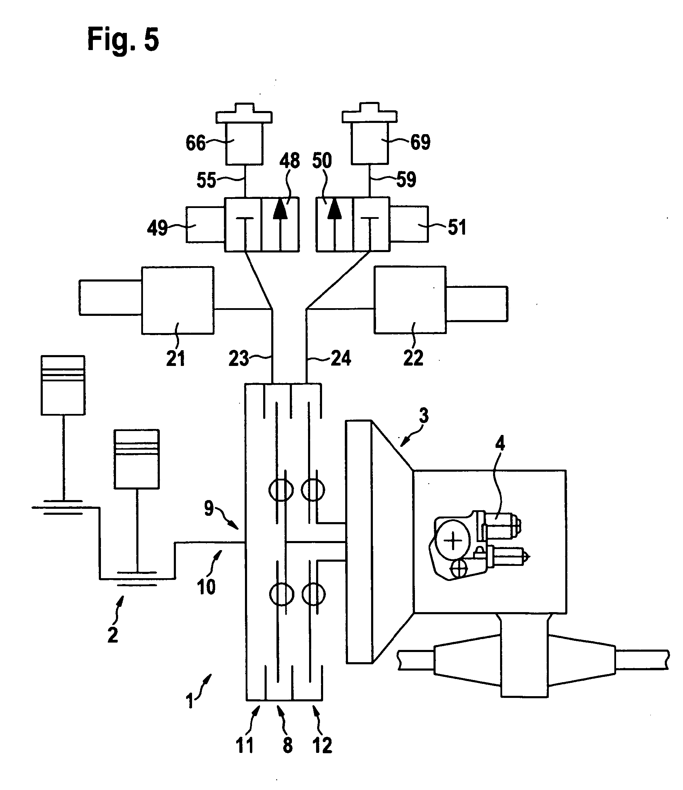

Das in Figur 5 dargestellte Ausführungsbeispiel ähnelt dem in Figur 3 dargestellten Ausführungsbeispiel. Allerdings stehen bei dem in Figur 5 dargestellten Ausführungsbeispiel die Hydraulikspeicher 66 und 69 nicht mit den Geberzylindern 21 und 22 in Verbindung. Gegenüber dem in Figur 3 dargestellten Ausführungsbeispiel entfallen also die Verbindungsleitungen (61 und 62 in Figur 3) zwischen den Geberzylindern 21 und 22 und den Hydraulikspeichern 66 und 69.

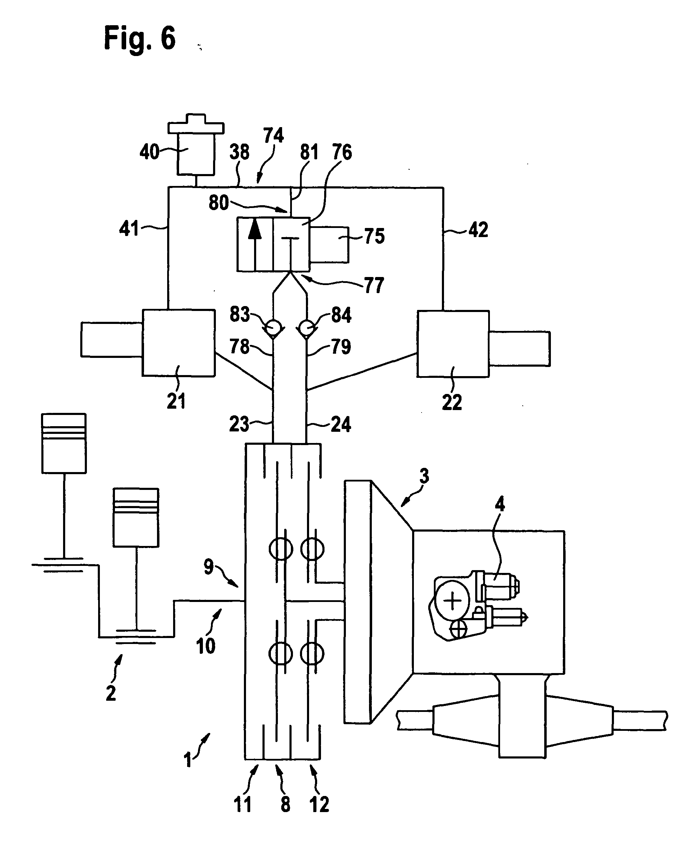

Das in Figur 6 dargestellte hydraulische Kupplungsbetätigungssystem umfasst eine Notöffnungsventileinrichtung 74 mit einem 2/2-Wegeventil 76, das durch einen Elektromagneten 75 betätigbar ist. Das 2/2-Wegeventil 76 weist einen gemeinsamen Anschluss 77 für zwei Abzweigungsleitungen 78 und 79 auf. Die Abzweigungsleitung 78 geht von der Druckmediumsleitung 23 aus. Die Abzweigungsleitung 79 geht von der Druckmediumsleitung 24 aus. Auf der gegenüberliegenden Seite weist das 2/2-Wegeventil 76 einen Anschluss 80 für eine Verbindungsleitung 81 auf, die über die Druckentspannungsleitung 38 mit dem Hydraulikspeicher 40 in Verbindung steht.

Die Abzweigungsleitung 78 ist mit einem Rückschlagventil 83 ausgestattet, das ein Rückströmen von Medium in die Druckmediumsleitung 23 verhindert. In gleicher Weise ist die Abzweigungsleitung 79 mit einem Rückschlagventil 84 ausgestattet, das ein Rückströmen von Medium in die Druckmediumsleitung 24 verhindert.

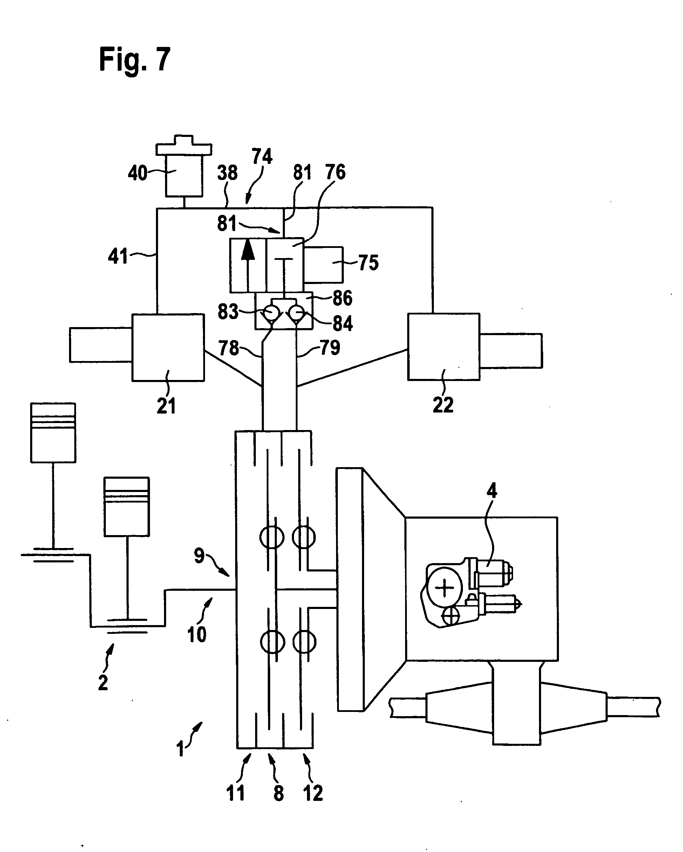

Das in Figur 7 dargestellte Ausführungsbeispiel ähnelt dem in Figur 6 dargestellten Ausführungsbeispiel. Im Unterschied zu dem in Figur 6 dargestellten Ausführungsbeispiel sind bei dem in Figur 7 dargestellten Ausführungsbeispiel die beiden Rückschlagventile 83 und 84 mit dem 2/2-Wegeventil 76 zusammengefasst, wie durch einen Rahmen 86 angedeutet ist, der an das 2/2-Wegeventil 76 angrenzt.

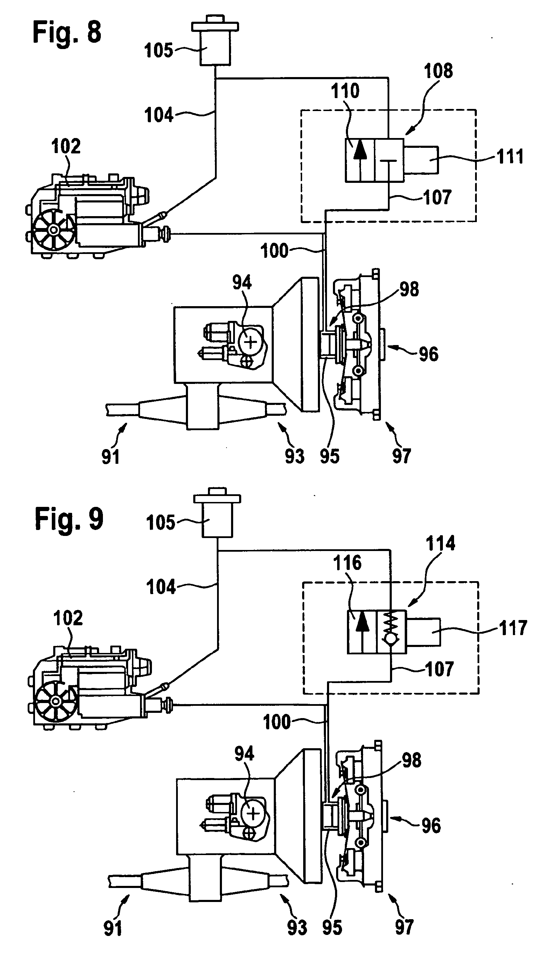

In Figur 8 ist ein Antriebsstrang 91 eines Kraftfahrzeugs schematisch dargestellt. Der Antriebsstrang 91 umfasst ein Getriebe 93, das mit Hilfe einer Getriebebetätigungseinrichtung 94 betätigbar ist. Das Getriebe 93 umfasst eine Getriebeeingangswelle 95. Zwischen das Getriebe 93 und eine (nicht dargestellte) Brennkraftmaschine ist eine Reibungskupplung 97 geschaltet, die ein Eingangsteil 96 aufweist. Die Reibungskupplung 97 ist im Gegensatz zu den vorangegangenen Ausführungsbeispielen als Einfachkupplung ausgeführt. Die Betätigung der Reibungskupplung 97 erfolgt mit Hilfe eines Nehmerzylinders 98, der über eine Druckmediumsleitung 100 mit einem Geberzylinder 102 in Verbindung steht. Der Geberzylinder 102 steht über eine Nachlaufleitung 104 mit einem Hydraulikspeicher 105 in Verbindung, der einen geringeren Druck als die Druckmediumsleitung 100 aufweist.

Die Druckmediumsleitung 100 steht über eine Druckentspannungsleitung 107, in der eine Notöffnungsventileinrichtung 108 angeordnet ist, mit dem Hydraulikspeicher 105 in Verbindung. Bei der Notöffnungsventileinrichtung 108 handelt es sich um ein 2/2-Wegeventil 110, das mit Hilfe eines Elektromagneten 111 betätigbar ist.

In der in Figur 8 dargestellten Stellung des 2/2-Wegeventils 110 ist eine Verbindung von der Druckmediumsleitung 100 über die Druckentspannungsleitung 107 und das 2/2-Wegeventil 110 zu dem Hydraulikspeicher 105 unterbrochen. Wenn das 2/2-Wegeventil 110 in seine zweite Stellung bewegt wird, dann wird die Verbindung zwischen der Druckmediumsleitung 100 über die Druckentspannungsleitung 107 zu dem Hydraulikspeicher 105 freigegeben, so dass der Druck in der Druckmediumsleitung 100 abgebaut wird. Vorzugsweise ist das 2/2-Wegeventil 110 in seine geöffnete Stellung vorgespannt und wird mit Hilfe des Elektromagneten 111 in seine geschlossene Stellung geschaltet, um den normalen Fahrbetrieb zu ermöglichen.

Das in Figur 9 dargestellte Ausführungsbeispiel ähnelt dem in Figur 8 dargestellten Ausführungsbeispiel. Zur Bezeichnung gleicher Teile werden gleiche Bezugszeichen verwendet. Um Wiederholungen zu vermeiden, wird auf die vorangegangene Beschreibung der Figur 8 verwiesen. Im Folgenden wird nur auf die Unterschiede zwischen den beiden Ausführungsbeispielen eingegangen.

Das in Figur 9 dargestellte hydraulische Kupplungsbetätigungssystem umfasst eine Notöffnungsventileinrichtung 114 mit einem 2/2-Wegeventil 116, das über einen Elektromagneten 117 betätigbar ist. Im Unterschied zu dem vorigen Ausführungsbeispiel ist bei dem in Figur 9 dargestellten Ausführungsbeispiel ein Rückschlagventil in das Ventil 116 integriert. Dadurch wird im geschlossenen Zustand des Wegeventils 116 eine Druckentspannung der Druckmediumsleitung 100 ermöglicht, sobald ein vorgegebenes Druckniveau in der Druckmediumsleitung 100 überschritten wird. Somit hat die Notöffnungsventileinrichtung 114 zusätzlich eine Druckbegrenzungsventilfunktion.

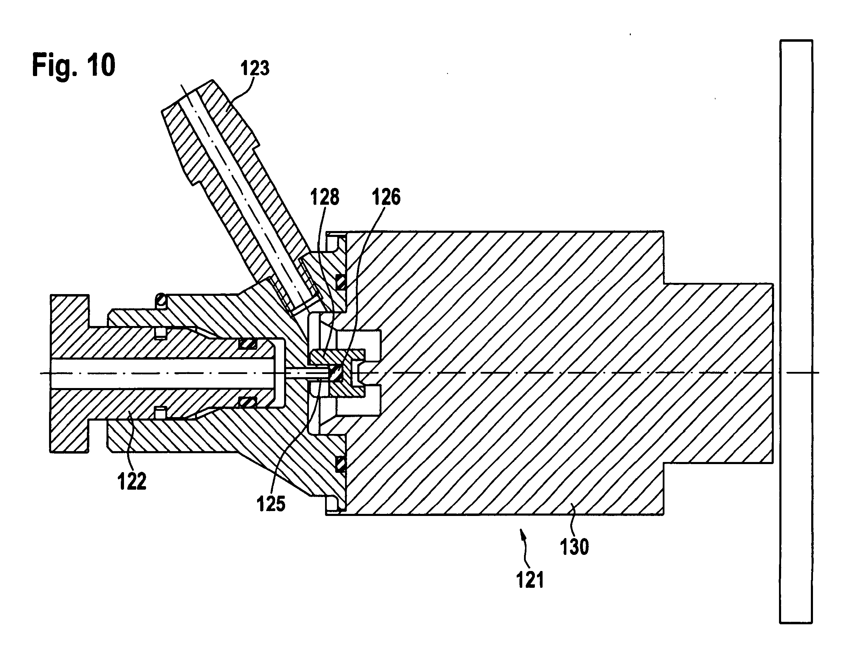

In Figur 10 ist ein Schnitt durch eine Notöffnungsventileinrichtung 121 dargestellt, die einen Anschluss 122 für eine Druckmediumsleitung aufweist, der auch als Druckanschluss bezeichnet wird. Des Weiteren weist die Notöffnungsventileinrichtung 121 einen Anschluss 123 für eine Rücklaufleitung auf, die auch als Druckentspannungsleitung bezeichnet wird. Der Druckleitungsanschluss 122 steht mit einer in das Innere der Notöffnungsventileinrichtung 121 ragenden Druckmediumseintrittsdüse 125 in Verbindung. Die Öffnung der Druckmediumseintrittsdüse 125 ist durch ein Dichtelement 126 verschließbar, das in einem Sackloch aufgenommen ist, das in einer Dichtungsträgereinrichtung 128 ausgespart ist. Der Innendurchmesser des Sacklochs ist etwas größer als der Außendurchmesser der Druckmediumseintrittsdüse 125. Die Dichtungsträgereinrichtung 128 befindet sich in ihrer Schließstellung, die durch Bestromung eines Elektromagneten 130 erreicht wird. Wenn die Bestromung des Elektromagneten 130 unterbrochen wird, dann sorgt der Druck in der Druckleitung dafür, dass das Dichtelement 126 mit der Dichtungsträgereinrichtung 128 von der Druckmediumseintrittsdüse 125 abhebt und eine Verbindung zwischen dem Druckanschluss 122 und dem Rücklaufanschluss 123 freigegeben wird.

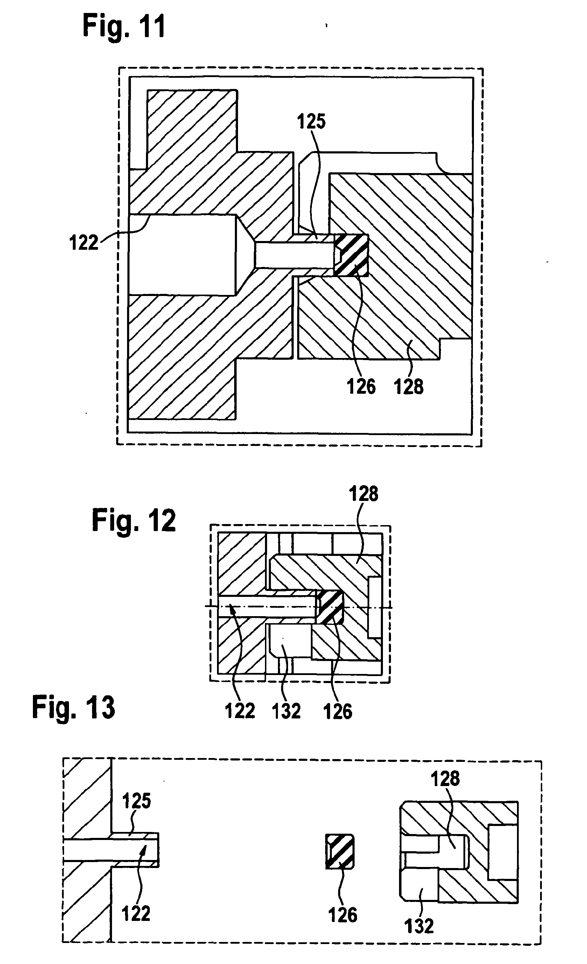

In Figur 11 ist ein Ausschnitt aus Figur 10 vergrößert dargestellt. In Figur 11 sieht man, dass das Dichtelement, das auch als Dichtungselement bezeichnet wird, eine umlaufende Anlagefläche für die Druckmediumseintrittsdüse 125 aufweist. In der Schnittdarstellung der Figur 12 sieht man, dass die Dichtungsträgereinrichtung 128 einen Verbindungskanal 132 aufweist, der sich in Querrichtung von dem Sackloch, in dem das Dichtelement 126 aufgenommen ist, nach außen erstreckt. Über den Verbindungskanal 132 gelangt mit Druck beaufschlagtes Medium aus dem Druckanschluss 122 in den Rücklaufanschluss 123, sobald das Dichtelement 126 von der Druckmediumsaustrittsdüse 125 abhebt. In Figur 13 ist eine Explosionsdarstellung der Einzelteile aus Figur 12 dargestellt.

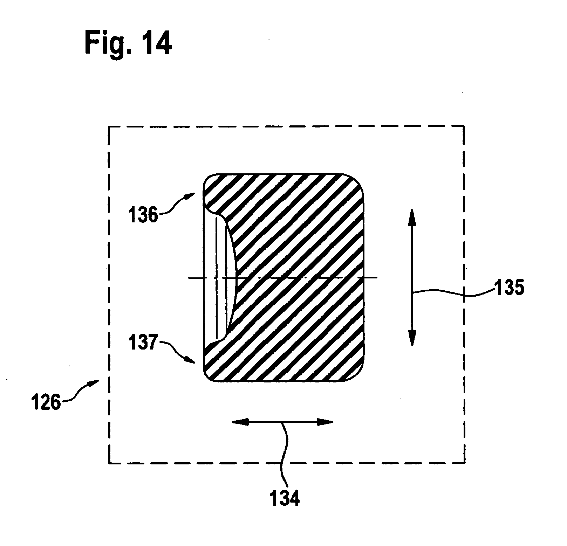

In Figur 14 ist das Dichtungselement 126 vergrößert in der Draufsicht dargestellt. Durch einen Doppelpfeil 134 ist die axiale Richtung angegeben. Durch einen Doppelpfeil 135 ist die radiale Richtung angegeben. In der vergrößerten Darstellung sieht man, dass das Dichtelement 126 eine umlaufende profilierte Dichtfläche 136, 137 für die Druckmediumseintrittsdüse aufweist. Das Dichtelement 126 ist vorzugsweise aus Gummi gebildet und weist in vorteilhafter Weise nur eine relativ geringe Fläche auf, die dem hydraulischen Druck aus der Druckmediumsleitung ausgesetzt ist. Die Gestalt des Dichtelements 126 hat den Vorteil, dass das Dichtelement 126 zwar verformt werden kann, um einen perfekten Dichtsitz zu gewährleisten, aber nicht von der abzudichtenden Fläche weg gedrückt werden kann.

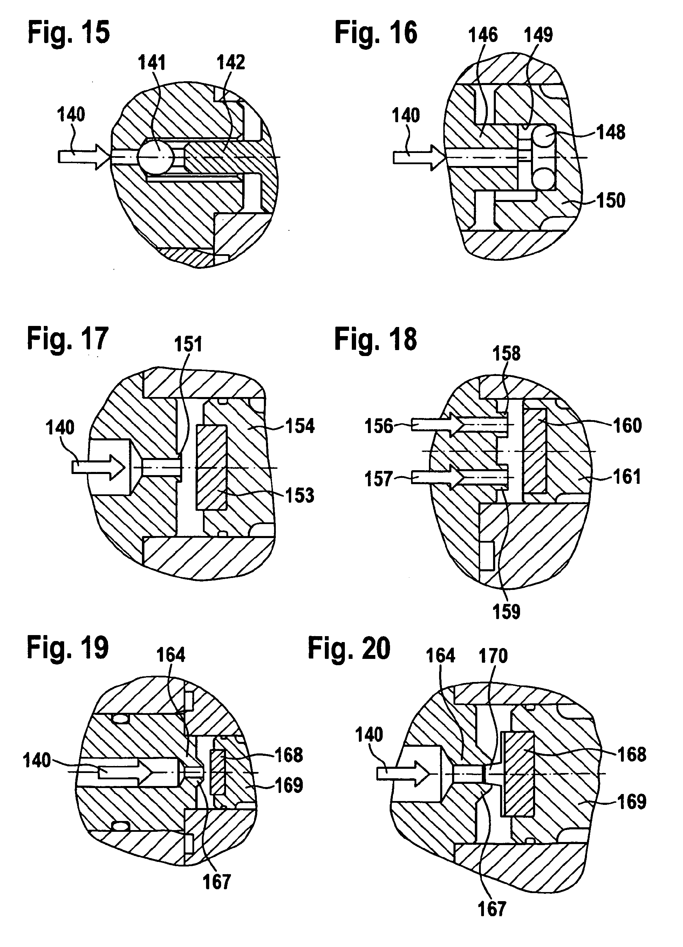

In Figur 15 ist ein Ausschnitt einer Notöffnungsventileinrichtung dargestellt, die, wie durch einen Pfeil 140 angedeutet ist, mit einer Druckmediumsleitung in Verbindung steht. Der Eintritt von Druckmedium wird durch eine Ventilkugel verhindert, die beispielsweise aus Gummi oder aus Stahl gebildet sein kann. Die Betätigung der Ventilkugel 141 erfolgt mit Hilfe eines Aktorelements 142 eines Elektromagneten.

In Figur 16 ist ein Ausschnitt einer Notöffnungsventileinrichtung dargestellt, die, wie durch einen Pfeil 140 angedeutet ist, mit einer Druckmediumsleitung in Verbindung steht. Das Druckmedium tritt an einer Druckmediumseintrittsdüse 146 ein, die durch eine O-Ringdichtung 148 verschließbar ist. Die O-Ringdichtung 148 ist in einem Sackloch 149 einer Dichtungsträgereinrichtung 150 angeordnet.

In Figur 17 ist ein Ausschnitt einer Notöffnungsventileinrichtung dargestellt, die, wie durch einen Pfeil 140 angedeutet ist, mit einer Druckmediumsleitung in Verbindung steht. Das Druckmedium gelangt durch eine Druckmediumseintrittsdüse, die einen ringförmig erhabenen Bereich 151 aufweist, in das Innere der Notöffnungsventileinrichtung. Die Druckmediumseintrittsdüse mit dem ringförmig erhabenen Bereich 151 ist durch ein im Wesentlichen kreisscheibenförmiges Dichtelement 153 verschließbar. Das Dichtelement 153 ist teilweise in einer Dichtungsträgereinrichtung 154 aufgenommen, die mit Hilfe eines Elektromagneten auf den erhabenen Bereich 151 zu bewegbar ist.

In Figur 18 ist eine Notöffnungsventileinrichtung dargestellt, die, wie durch zwei Pfeile 156 und 157 angedeutet ist, mit zwei Druckmediumsleitungen in Verbindung steht. Im Eintrittsbereich des Druckmediums sind ringförmig erhabene Bereiche 158 und 159 vorgesehen. Die beiden ringförmig erhabenen Bereiche 158 und 159 können durch ein einziges Dichtelement 160 verschlossen werden, das in einer Dichtungsträgereinrichtung 161 aufgenommen ist.

In Figur 19 ist eine Notöffnungsventileinrichtung dargestellt, die, wie durch einen Pfeil 140 angedeutet ist, mit einer Druckmediumsleitung in Verbindung steht. Das Druckmedium gelangt durch eine Druckmediumseintrittsdüse 164 in das Innere der Notöffnungsventileinrichtung. Die Druckmediumseintrittsdüse 164 weist innen einen ringförmig erhabenen Bereich 167 auf, der radial nach außen abgeflacht ist. Die Druckmediumseintrittsdüse 164 ist durch ein Dichtelement 168 verschließbar, das in einer Dichtungsträgereinrichtung 169 aufgenommen ist.

In Figur 20 ist ein Ausschnitt einer Notöffnungsventileinrichtung dargestellt, die, wie durch einen Pfeil 140 angedeutet ist, mit einer Druckmediumsleitung in Verbindung steht. Das Druckmedium gelangt durch eine Druckmediumseintrittsdüse 164, die im Inneren der Notöffnungsventileinrichtung einen ringförmig erhabenen Bereich 167 aufweist, der radial außen abgeflacht ist, in das Innere der Notöffnungsventileinrichtung. Die Druckmediumseintrittsdüse 164 ist durch einen stopfenartigen Verschluss 170 verschließbar, der von einem Dichtelement 168 ausgeht, das in einer Dichtungsträgereinrichtung 169 aufgenommen ist.

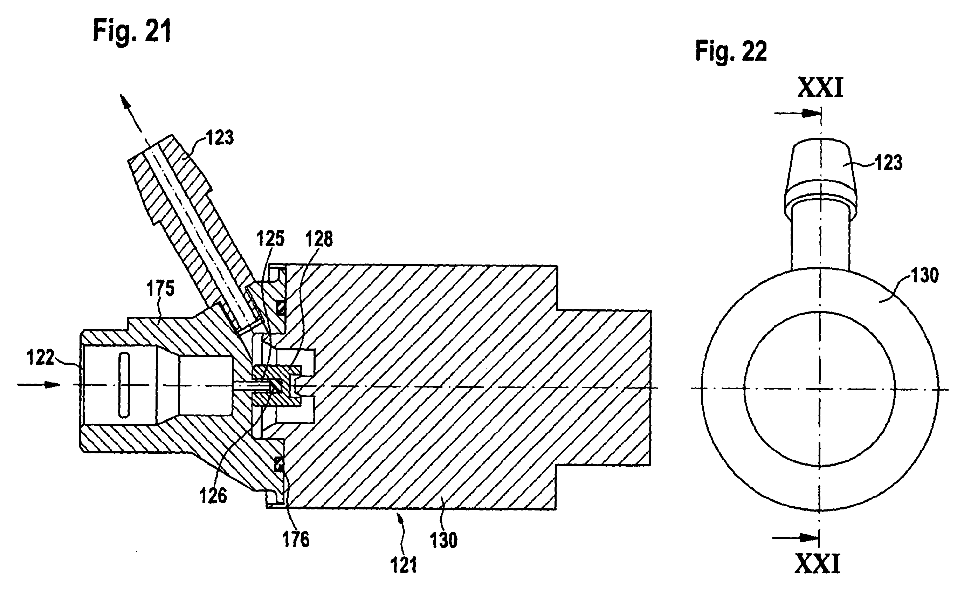

In Figur 21 ist eine ähnliche Notöffnungsventileinrichtung wie in Figur 10 dargestellt. Zur Bezeichnung gleicher Teile werden gleiche Bezugszeichen verwendet. Um Wiederholungen zu vermeiden, wird auf die vorangegangene Beschreibung der Figur 10 verwiesen. Die Notöffnungsventileinrichtung umfasst ein Gehäuse 175, das mit Hilfe einer Dichtung 176, die zwischen dem Gehäuse 175 und dem Elektromagneten 130 angeordnet ist, zur Umgebung hin abgedichtet ist. In Figur 22 ist die Notöffnungsventileinrichtung aus Figur 21 in der Seitenansicht von rechts dargestellt.

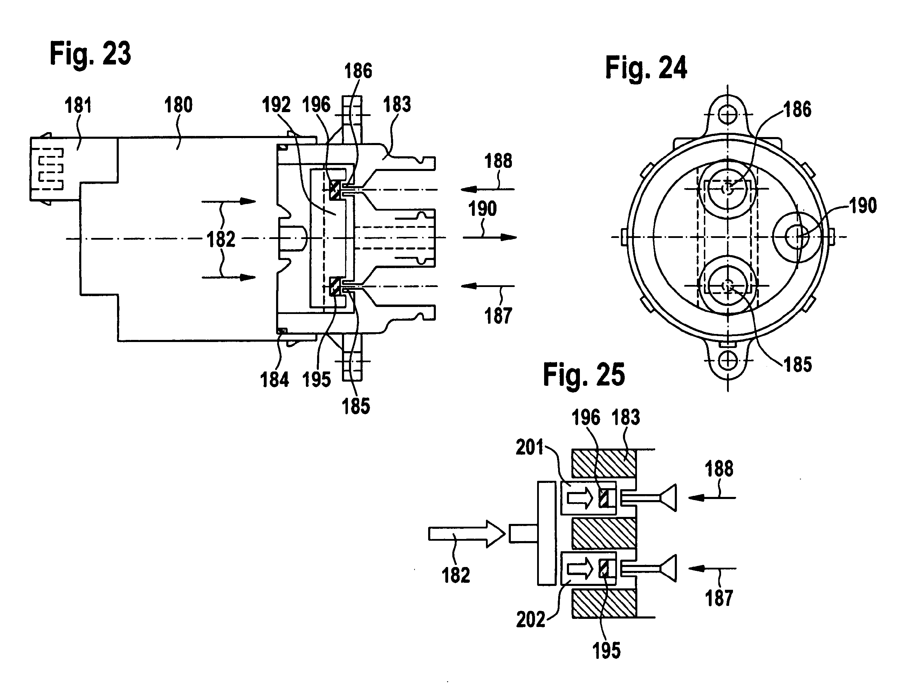

In den Figuren 23 und 24 ist eine Notöffnungsventileinrichtung mit einem Elektromagneten 180 in verschiedenen Ansichten dargestellt. Der Elektromagnet 180 weist einen elektrischen Anschluss 181 auf, über den der Elektromagnet 180 bestromt werden kann. Durch Pfeile 182 ist eine Bewegung angedeutet, die der Elektromagnet 180 bewirkt, wenn er bestromt wird.

Die in den Figuren 23 und 24 dargestellte Notöffnungsventileinrichtung weist ein Gehäuse 183 auf, das an dem Elektromagneten 180 befestigt ist, oder umgekehrt. Zwischen dem Elektromagneten 180 und dem Gehäuse 183 ist eine Dichtung 184 angeordnet. Das Gehäuse 183 weist zwei Druckmediumseintrittsdüsen 185, 186 auf, die in das Innere des Gehäuses 183 ragen. Die Druckmediumseintrittsdüsen 185, 186 stehen mit Druckmediumsleitungen in Verbindung, wie durch Pfeile 187 und 188 angedeutet ist. Durch einen weiteren Pfeil 190 ist angedeutet, dass der Innenraum des Gehäuses 183 mit einer Druckentspannungsleitung in Verbindung steht, die auch als Rücklaufleitung bezeichnet wird.

Im Inneren des Gehäuses 183 ist ein Dichtungsträger 192 mit Hilfe des Elektromagneten 180 aus einer Öffnungsstellung in eine Schließstellung bewegbar. Der Dichtungsträger 192 weist zwei Sacklöcher auf, in denen jeweils ein Dichtelement 195, 196 aufgenommen ist. Die Dichtelemente 195 und 196 dienen dazu, die Druckmediumseintrittsdüsen 185 und 186 zu verschließen, wenn sich der Dichtungsträger 192 im bestromten Zustand des Elektromagneten 180 in seiner Schließstellung befindet.

In Figur 25 ist angedeutet, dass die Dichtungselemente 195 und 196 auch in separaten Dichtungsträgereinrichtungen 201 und 202 aufgenommen sein können. Ansonsten entspricht das in Figur 25 dargestellte Ausführungsbeispiel dem in den Figuren 23 und 24 dargestellten Ausführungsbeispiel.

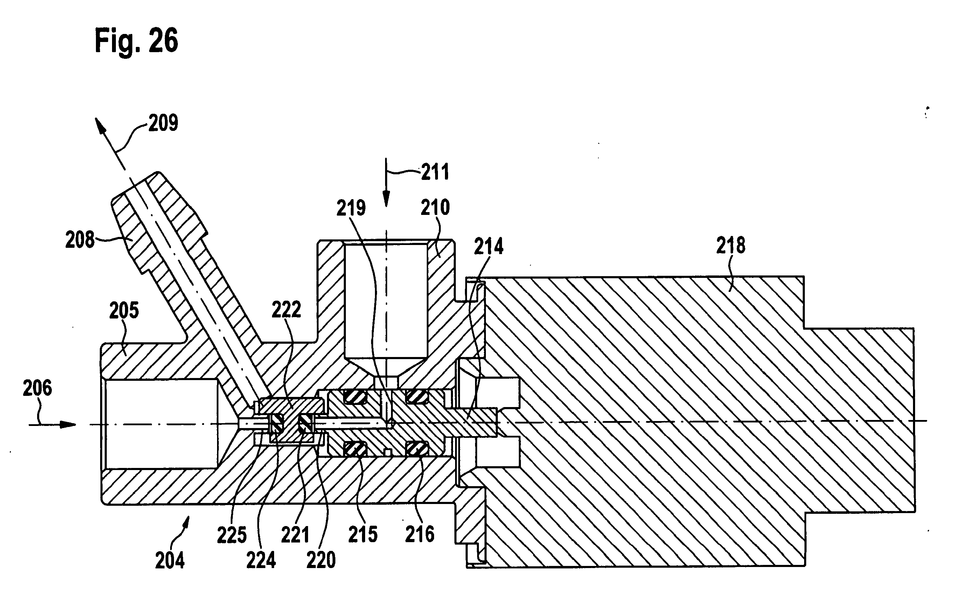

In Figur 26 ist eine Notöffnungsventileinrichtung dargestellt, die ein Gehäuse 204 aufweist. Das Gehäuse 204 ist mit einem Druckanschluss 205 für eine Druckmediumsleitung ausgestattet, wie durch einen Pfeil 206 angedeutet ist. Außerdem ist das Gehäuse 204 mit einem Anschluss 208 für eine Druckentspannungsleitung ausgestattet, die auch als Rücklaufleitung bezeichnet wird und durch einen Pfeil 209 angedeutet ist. Darüber hinaus ist das Gehäuse 204 mit einem weiteren Druckanschluss 210 ausgestattet, der mit einer weiteren Druckmediumsleitung in Verbindung steht, wie durch einen Pfeil 211 angedeutet ist.

In dem Gehäuse 204 ist ein Ventilkolben 214 mit Dichtelementen 215 und 216 in einer entsprechenden Bohrung hin und her bewegbar aufgenommen. Der Ventilkolben 214 ist mit Hilfe eines Elektromagneten 218 zwischen einer Öffnungsstellung und einer Schließstellung in axialer Richtung bewegbar. Der Ventilkolben 214 weist einen Durchgangskanal 219 auf, der den Druckanschluss 210 mit einer Druckmediumseintrittsdüse 220 an der dem Elektromagneten 218 abgewandten Stirnseite des Ventilkolbens 214 verbindet. Die Druckmediumseintrittsdüse 220 ist durch ein Dichtelement 221 verschließbar, das in einem Dichtungsträger 222 aufgenommen ist. In dem Dichtungsträger 222 ist ein weiteres Dichtelement 224 aufgenommen, durch das eine weitere Druckmediumseintrittsdüse 225 verschließbar ist, die mit dem Druckanschluss 205 in Verbindung steht. Wenn der Elektromagnet 218 bestromt wird, dann wird der Ventilkolben 214 auf die Dichtungsträgereinrichtung 222 zu bewegt. Dadurch werden die Dichtungen 221 und 224 so gegen die Druckmediumseintrittsdüsen 220 und 225 gedrückt, dass die letztgenannten verschlossen werden. Durch die vorzugsweise als O-Ringe ausgeführten Dichtungen 215 und 216 wird eine unerwünschte Fluidleckage verhindert. Der Elektromagnet 218 ist intern abgedichtet. Wenn die Bestromung des Elektromagneten 218 unterbrochen wird, dann kehrt der Elektromagnet 218 in seine Öffnungsstellung zurück und ermöglicht den Durchtritt von Druckmedium von den Druckanschlüssen 205 und 210 zu dem Druckentspannungsanschluss 208.

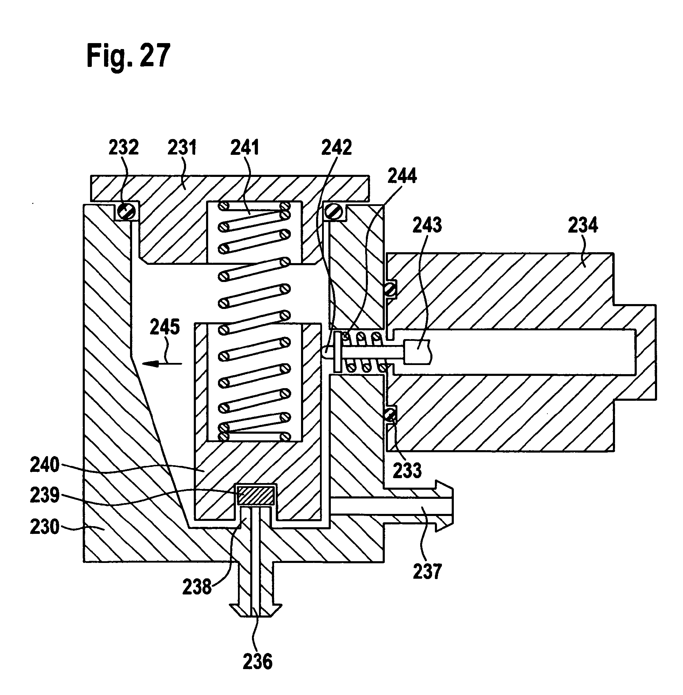

In Figur 27 ist eine Notöffnungsventileinrichtung mit einem Gehäuse 230 dargestellt, das durch einen Deckel 231 verschlossen ist. Zwischen dem Deckel 231 und dem Gehäuse 230 ist eine Dichtung 232 angeordnet. Eine weitere Dichtung 233 ist zwischen dem Gehäuse 230 und einem Elektromagneten 234 angeordnet, der eine lineare Elektromagnetspule umfasst. Das Gehäuse 230 ist mit einem Druckanschluss 236 für eine Druckmediumsleitung ausgestattet. Außerdem ist das Gehäuse mit einem Rücklaufanschluss 237 für eine Rücklaufleitung ausgestattet. Im Inneren weist das Gehäuse 230 eine Druckmediumseintrittsdüse 238 auf, die mit dem Druckanschluss 236 in Verbindung steht. Die Druckmediumseintrittsdüse 238 ist durch ein Dichtelement 239 verschließbar, das in einem Sackloch eines Dichtungsträgers 240 aufgenommen ist. Das Sackloch in dem Dichtungsträger 240 weist einen Innendurchmesser auf, der etwas größer als der Außendurchmesser der Druckmediumseintrittsdüse 238 ist.

Zwischen dem Dichtungsträger 240 und dem Deckel 231 des Gehäuses 230 ist eine Schraubendruckfeder 241 so eingespannt, dass das Dichtelement 239 gegen die Druckmediumseintrittsdüse 238 gedrückt wird, um diese zu verschließen. Erst wenn ein vorgegebener Druck in der an den Druckanschluss 236 angeschlossenen Druckmediumsleitung überschritten wird, hebt das Dichtelement 239 entgegen der Vorspannkraft der Schraubendruckfeder 241 von der Druckmediumseintrittsdüse 238 ab.

Darüber hinaus befindet sich ein Ende 242 eines Betätigungsbolzens 243 radial außen an dem dem Dichtelement 239 abgewandten Ende des Dichtungsträgers 240 in Anlage. Der Betätigungsbolzen 243 wird durch die Vorspannkraft einer Druckfeder 244 im unbestromten Zustand des Elektromagneten 234, wie durch einen Pfeil 245 angedeutet ist, so im Inneren des Gehäuses 230 gekippt, dass das Dichtelement 239 von der Druckmediumseintrittsdüse 238 abhebt. Wenn der Elektromagnet 234 bestromt wird, dann wird der Betätigungsbolzen 243 entgegen der Vorspannkraft der Druckfeder 244 wieder in seine Ausgangslage zurückgezogen. In diesem Zustand erfüllt das Dichtelement 239 mit Hilfe der Schraubendruckfeder 241 eine Druckbegrenzungsfunktion. Wenn die Bestromung des Elektromagneten 234 unterbrochen wird, dann sorgt die Druckfeder 244 dafür, dass der Betätigungsbolzen 234 den Dichtungsträger 240 in Richtung des Pfeils 245 kippt.

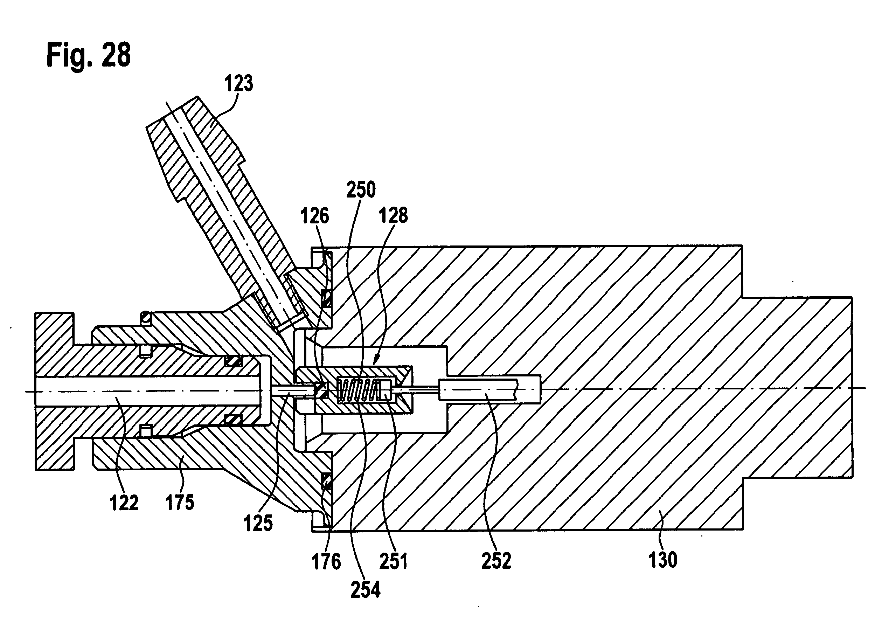

In Figur 28 ist eine ähnliche Notöffnungsventileinrichtung wie in den Figuren 10 und 25 dargestellt. Zur Bezeichnung gleicher Teile werden die gleichen Bezugszeichen verwendet. Um Wiederholungen zu vermeiden, wird auf die vorangegangene Beschreibung der Figuren 10 und 25 verwiesen. Im Folgenden wird nur auf die Unterschiede zwischen den einzelnen Ausführungsbeispielen eingegangen.

Bei dem in Figur 28 dargestellten Ausführungsbeispiel umfasst die Dichtungsträgereinrichtung 128 einen Aufnahmeraum 250 für ein Ende 251 eines Aktors 252 des Elektromagneten 130. Zwischen das Ende 251 des Aktors 252 und die gegenüberliegende Stirnfläche des Aufnahmeraums 250 ist eine Schraubendruckfeder 254 so eingespannt, dass die Dichtungsträgereinrichtung 128 mit dem Dichtungselement 126 gegen die Druckmediumseintrittsdüse 125 gedrückt wird, um diese zu schließen. Erst wenn der Druck in der an den Druckanschluss 122 angeschlossenen Druckmediumsleitung so groß wird, dass die Vorspannkraft der Schraubendruckfeder 254 überwunden wird, dann hebt das Dichtungselement 126 mit der Dichtungsträgereinrichtung 128 von der Druckmediumseintrittsdüse 125 ab. Wenn der Elektromagnet 130 bestromt wird, dann drückt der Aktor 252 die Dichtungsträgereinrichtung 128 unter Zwischenschaltung der Schraubendruckfeder 254 so gegen die Druckmediumseintrittsdüse 125, dass das Dichtungselement 126 die Druckmediumseintrittsdüse 125 verschließt. Wenn die Bestromung des Elektromagneten 130 unterbrochen wird, dann kehrt die Dichtungsträgereinrichtung 128 in ihre Öffnungsstellung zurück, in der das Dichtungselement 126 von der Druckmediumseintrittsdüse 125 abgehoben ist. Darüber hinaus ermöglicht die Schraubendruckfeder 254 im geschlossenen Zustand der Ventileinrichtung die vorab beschriebene Druckbegrenzungsfunktion.

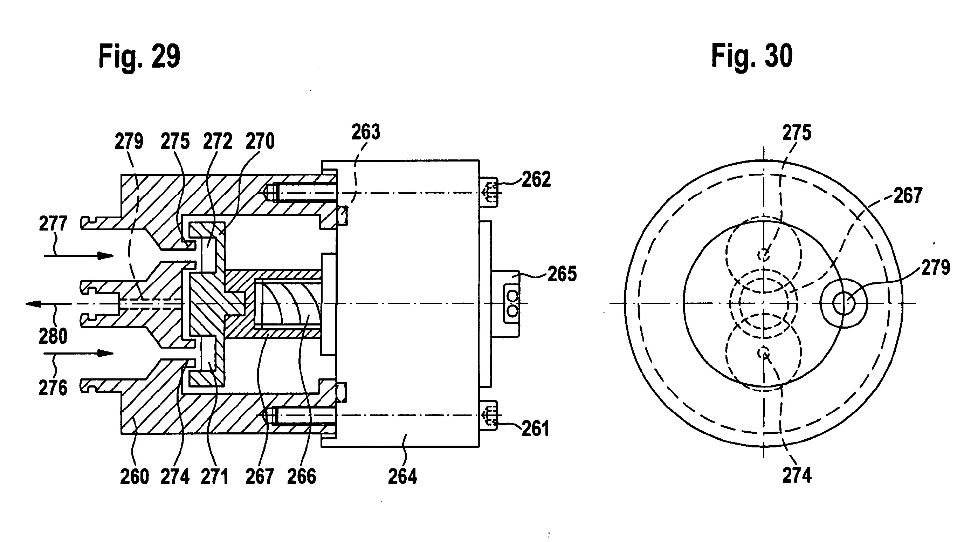

In den Figuren 29 und 30 ist eine Notöffnungsventileinrichtung mit einem Gehäuse 260 in verschiedenen Ansichten dargestellt. An dem Gehäuse 260 ist mit Hilfe von Schrauben 261 und 262 unter Zwischenschaltung einer Dichtung 263 ein Elektromagnet 264 befestigt. Der Elektromagnet 264 weist einen elektrischen Anschluss 265 auf, über den der Elektromagnet 264 bestromt werden kann. Wenn der Elektromagnet 264 bestromt wird, dann führt ein Aktor 266 eine Drehbewegung aus. Der Aktor 266 ist mit einem Außengewinde ausgestattet, das mit dem Innengewinde einer Mutter 267 zusammenwirkt, die auf den Aktor 266 aufgeschraubt ist. Die Mutter 267 ist im eingebauten Zustand drehfest, aber axial bewegbar in dem Gehäuse 260 geführt. Dadurch wird erreicht, dass die Mutter 267 eine axiale Bewegung ausführt, wenn der Elektromagnet 264 bestromt wird.

Die Mutter 267 ist mit einem Dichtungsträger 270 gekoppelt, der zwei Sacklöcher zur Aufnahme von Dichtelementen 271 und 272 aufweist. Die Dichtelemente 271 und 272 dienen dazu, Druckmediumseintrittsdüsen 274 und 275 zu öffnen oder zu verschließen. Durch Pfeile 276 und 277 ist angedeutet, dass die Druckmediumseintrittsdüsen 274 und 275 mit Druckmediumsleitungen in Verbindung stehen, die an das Gehäuse 260 angeschlossen sind. Durch zwei gestrichelte Linien ist ein Druckentspannungskanal 279 angedeutet, der, wie durch einen Pfeil 280 angedeutet ist, mit einer Druckentspannungsleitung in Verbindung steht, die auch als Rücklaufleitung bezeichnet wird. In Figur 30 sieht man, dass der Druckentspannungskanal 279 bezogen auf die im Wesentlichen in einer Linie angeordneten Druckmediumseintrittdüse 274 und 275 versetzt angeordnet ist.

Der Aktor 266 weist eine relativ große Gewindesteigung auf und wird durch den Elektromagneten 264 so in Drehung versetzt, dass die Dichtungselemente 271 und 272 die Druckmediumseintrittsdüsen 274 und 275 verschließen. Wenn die Bestromung des Elektromagneten 264 unterbrochen wird, dann lösen sich die Dichtungselemente 271 und 272 von den Druckmediumseintrittsdüsen 274 und 275 und der Druck in den Druckmediumsleitungen wird in die Rücklaufleitung entspannt.

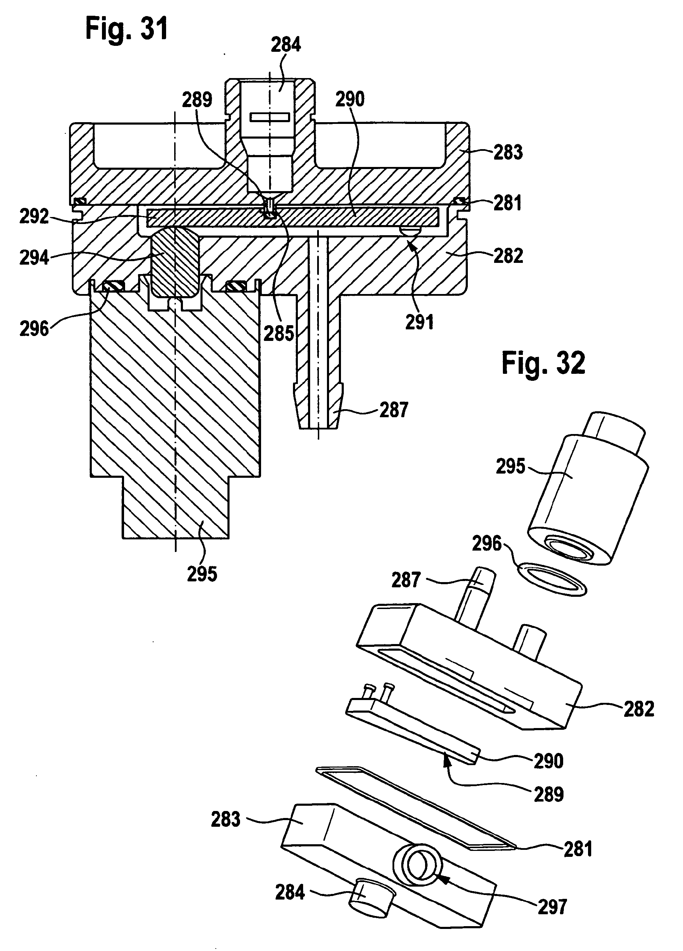

In den Figuren 31 und 32 ist eine Notöffnungsventileinrichtung mit einem Gehäuse 282 in zwei verschiedenen Ansichten dargestellt. An dem Gehäuse 282 ist unter Zwischenschaltung einer Dichtung 281 ein Deckel 283 befestigt. Der Deckel 283 ist mit einem Druckanschluss 284 für eine Druckmediumsleitung ausgestattet. Von dem Deckel 283 ragt eine Druckmediumseintrittsdüse 285, die mit dem Druckanschluss 284 in Verbindung steht, in das Innere des Gehäuses 282.

Das Gehäuse 282 ist mit einem Druckentspannungsanschluss 287 ausgestattet, der zum Anschließen einer Druckentspannungsleitung dient, die auch als Rücklaufleitung bezeichnet wird. Die Druckmediumseintrittsdüse 285 ist durch ein Dichtelement 289 verschließbar, das in einem Sackloch angeordnet ist, das wiederum im mittleren Bereich eines hebelartigen Dichtungsträgers 290 ausgespart ist. Der hebelartige Dichtungsträger 290 weist an einem Ende mindestens eine Lagerstelle 291 auf, um die der hebelartige Dichtungsträger 290 verschwenkbar ist. An dem anderen Ende des hebelartigen Dichtungsträgers 290 greift ein Aktorelement 294 eines Elektromagneten 295 an. Der Elektromagnet 295 ist unter Zwischenschaltung einer Dichtung 296 druckdicht an das Gehäuse 282 angebaut. In der Explosionsdarstellung der Figur 32 sieht man, dass der Deckel 283 mit einem weiteren Druckanschluss 297 ausgestattet sein kann.

Der Elektromagnet 295 übt über den Aktor 294 eine Kraft auf das Ende 292 des hebelartigen Dichtungsträgers 290 aus, der um die Lagerstelle 291 verschwenkbar ist. Diese Kraft wird nach dem Hebelprinzip auf das Dichtelement 298 übertragen, so dass diese gegen die Druckmediumseintrittsdüse 285 gedrückt wird. Die in den Figuren 31 und 32 gezeigte Notöffnungsventileinrichtung ist sowohl für Einfachkupplungen als auch für Doppelkupplungen verwendbar. Die gezeigte Dichtungsträgereinrichtung kann für eine oder für mehrere Dichtungselemente verwendet werden. Wenn die Bestromung des Elektromagneten 295 unterbrochen wird, dann sorgt der Druck in dem Druckanschluss 284 und/oder in dem Druckanschluss 297 dafür, dass der hebelartige Dichtungsträger 290 in seine Öffnungsstellung zurück bewegt wird, wobei das Dichtungselement 289 von der Druckmediumseintrittsdüse 285 abhebt.

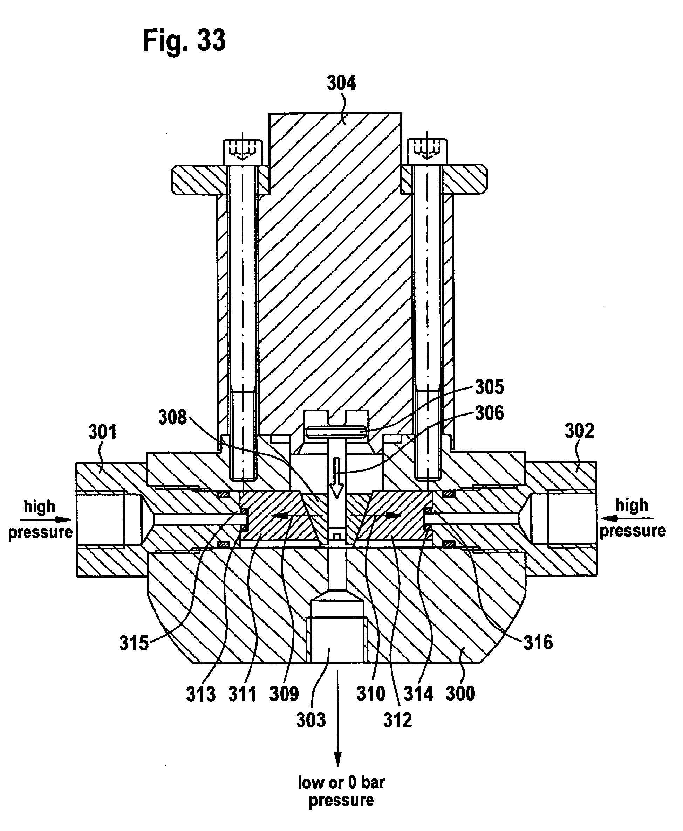

In Figur 33 ist eine Notöffnungsventileinrichtung mit einem Gehäuse 300 dargestellt, das mit einem Druckanschluss 301 und mit einem weiteren Druckanschluss 302 ausgestattet ist. Die Druckanschlüsse 301 und 302 dienen zum Anschluss von Druckmediumsleitungen. Außerdem ist das Gehäuse 300 mit einem Druckentspannungsanschluss 303 zum Anschließen einer Druckentspannungsleitung ausgestattet, die auch als Rücklaufleitung bezeichnet wird. An das Gehäuse 300 ist ein Elektromagnet 304 angebaut, der einen Aktor 305 aufweist. Durch einen Pfeil 306 ist die Richtung einer Bewegung angedeutet, die der Aktor ausführt, wenn der Elektromagnet 304 bestromt wird.

Der Aktor 305 wirkt mit einer Keileinrichtung 308 zusammen, die bei einer Bestromung des Elektromagneten 304 über den Aktor 305 nach unten gedrückt wird, wie durch den Pfeil 306 angedeutet ist. Die Keileinrichtung 308, die mehrteilig ausgebildet ist, wirkt mit Dichtungsträgern 311, 312 zusammen, in denen jeweils ein Dichtungselement 313, 314 aufgenommen ist. Die Dichtungselemente 313 und 314 dienen dazu, Druckmediumseintrittsdüsen 315 und 316 zu verschließen, die jeweils mit einem der Druckanschlüsse 301 und 302 in Verbindung stehen. Die Dichtungsträger werden, wie durch Pfeile 309 und 310 angedeutet ist, nach außen gedrückt, wenn sich die Keileinrichtung 308 in Richtung des Pfeils 306 nach unten bewegt.

Die zwischen den Dichtungsträgereinrichtungen 311 und 312 angeordnete Keileinrichtung 308 bewirkt eine lineare Bewegung der Dichtungselemente 313 und 314 in entgegengesetzten Richtungen. Durch den Winkel der Keileinrichtung 308 kann die von dem Elektromagneten 304 erzeugte Kraft verstärkt werden. Wenn die Bestromung des Elektromagneten 304 unterbrochen wird, dann bewegen sich die Dichtungsträger 311 und 312 und die Keileinrichtung 308 aufgrund des Drucks in den Druckmediumsleitungen in ihre Öffnungsstellungen zurück. Um den Einfluss der Reibungskräfte zu verringern, können Gleit- oder Rollelemente zwischen der Keileinrichtung 308 und den Dichtungsträgereinrichtungen 311 und 312 verwendet werden.

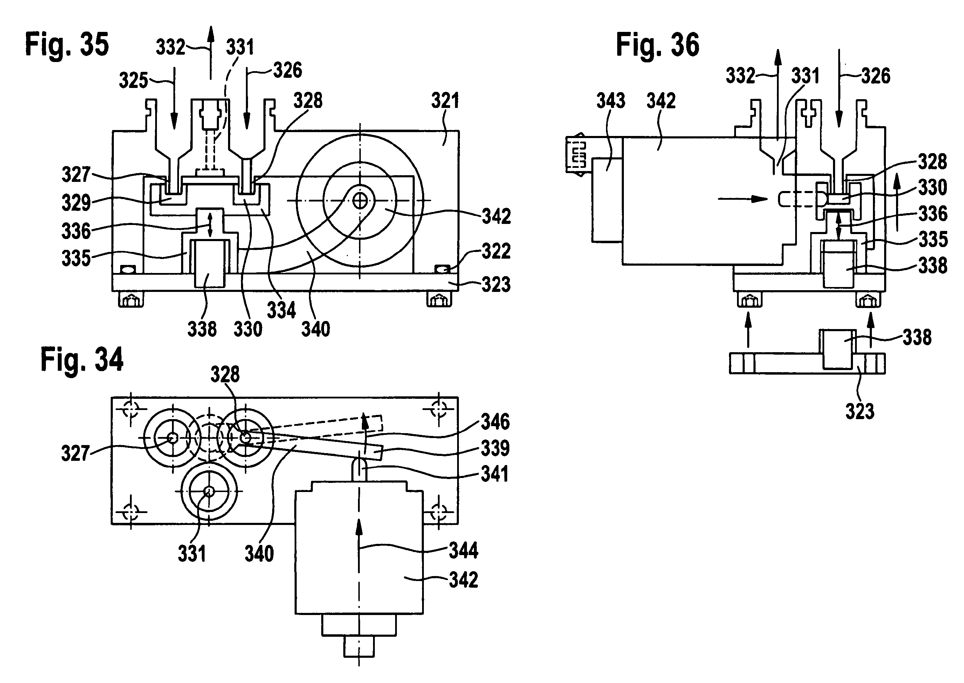

In den Figuren 34 bis 36 ist eine Notöffnungsventileinrichtung mit einem Gehäuse 321 in verschiedenen Ansichten dargestellt. Das Gehäuse 321 ist an seiner Unterseite unter Zwischenschaltung einer Dichtung 322 durch einen Deckel 323 verschlossen. Durch Pfeile 325 und 326 sind Druckmediumsleitungen angedeutet, die an das Gehäuse 321 angeschlossen sind. Die Druckmediumsleitungen stehen mit Druckmediumseintrittsdüsen 327 und 328 in Verbindung, die in das Innere des Gehäuses 321 ragen. Die Druckmediumseintrittsdüsen 327 und 328 sind durch Dichtungselemente 329 und 330 verschließbar. Das Gehäuse 321 weist des Weiteren einen gestrichelt angedeuteten Druckentspannungsanschluss 331 auf, an den eine durch einen Pfeil 332 angedeutete Druckentspannungsleitung anschließbar ist, die auch als Rücklaufleitung bezeichnet wird.

Die Dichtungselemente 329 und 330 sind in Sacklöchern aufgenommen, die in einem Dichtungsträger 334 ausgespart sind. Der Dichtungsträger 334 ist mit einem Innengewindeelement 335 gekoppelt, das in Richtung eines Doppelpfeils 336 in dem Gehäuse 321 bewegbar ist. Das Innengewindeelement 335 weist ein Innengewinde auf, das mit einem Außengewinde eines Außengewindeelements 338 zusammenwirkt, das an dem Deckel 323 befestigt ist.

Von dem Innengewindeelement 335 geht ein Hebelarm 340 aus, dessen freies Ende 339 durch ein Aktorelement 341 eines Elektromagneten 342 beaufschlagt ist. Der Elektromagnet 342 ist an das Gehäuse 321 angebaut und weist einen elektrischen Anschluss 343 auf. Wenn der Elektromagnet 342 bestromt wird, dann führt der Aktor 341 eine Bewegung in Richtung eines Pfeils 344 aus. Das wiederum führt dazu, dass das freie Ende 339 des Hebelarms 340 sich in Richtung eines Pfeils 346 (in Figur 34) bewegt. Diese Bewegung wiederum führt dazu, dass sich das Innengewindeelement 335 auf dem Außengewindeelement 338 so nach oben schraubt, dass die Dichtungsträgereinrichtung 334 mit den Dichtungselementen 329 und 330 gegen die Druckmediumseintrittsdüsen 327 und 328 gedrückt werden. Das Innengewindeelement 335 und das Außengewindeelement 338 weisen eine relativ große Gewindesteigung auf. Durch die in die Dichtungsträgereinrichtung 334 eingreifenden Druckmediumseintrittsdüsen 327 und 328 wird ein Verdrehen der Dichtungsträgereinrichtung 334 in dem Gehäuse 321 verhindert.

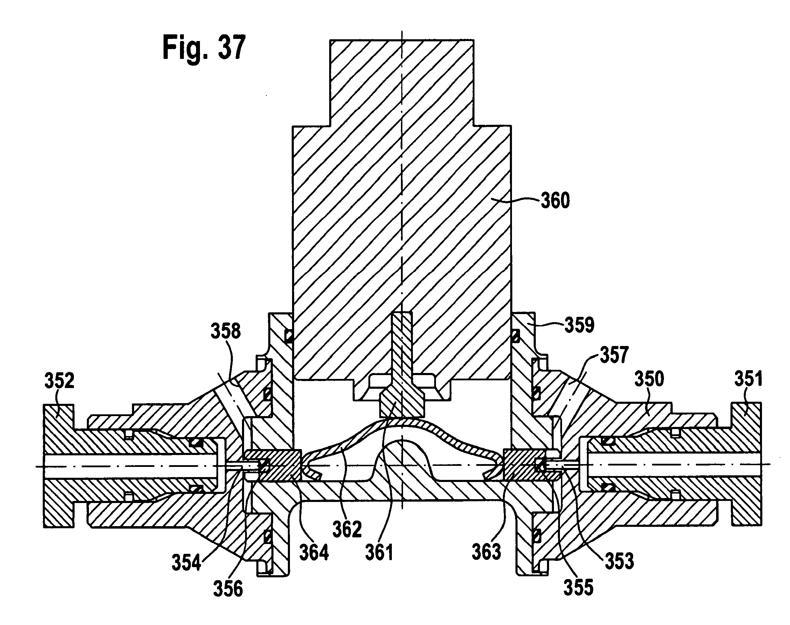

In Figur 37 ist eine Notöffnungsventileinrichtung mit einem Gehäuseteil 350 im Schnitt dargestellt. Das Gehäuseteil 350 ist mit Druckanschlüssen 351 und 352 zum Anschluss von Druckmediumsleitungen ausgestattet. Die Druckanschlüsse 351 und 352 stehen mit Druckmediumseintrittsdüsen 353 und 354 in Verbindung, die in das Innere des Gehäuseteils 350 ragen. Die Druckmediumseintrittsdüsen 353 und 354 sind durch Dichtelemente 355 und 356 verschließbar. Außerdem weist das Gehäuseteil 350 Druckentspannungsanschlüsse 357 und 358 für Druckentspannungsleitungen auf, die auch als Rücklaufleitungen bezeichnet werden.

Die in Figur 37 dargestellte Notöffnungsventileinrichtung umfasst ein weiteres Gehäuseteil 359, in das ein linearer Elektromagnet 360 eingebaut ist. Der Elektromagnet 360 betätigt einen Aktorkopf 361. Der Aktorkopf 361 befindet sich in Anlage an der Oberseite eines elastischen Kopplungselements 362. Das elastische Kopplungselement 362 weist, im Schnitt betrachtet, zwei nach außen abgewinkelte Arme auf, die an Dichtungsträgereinrichtungen 363 und 364 anliegen. Das elastische Kopplungselement 362 ist vorzugsweise aus Federstahl gebildet. Wenn der Elektromagnet 360 bestromt wird, dann drückt der Aktorkopf 361 so auf das elastische Kopplungselement 362, dass dieses sich verformt und die Dichtungsträgereinrichtungen 363 und 364 mit den Dichtungselementen 355 und 356 gegen die Druckmediumseintrittsdüsen 353 und 354 drückt. Wenn die Bestromung des Elektromagneten 360 unterbrochen wird, dann kehrt das elastische Kopplungselement 362 wieder in seine Öffnungsstellung zurück.

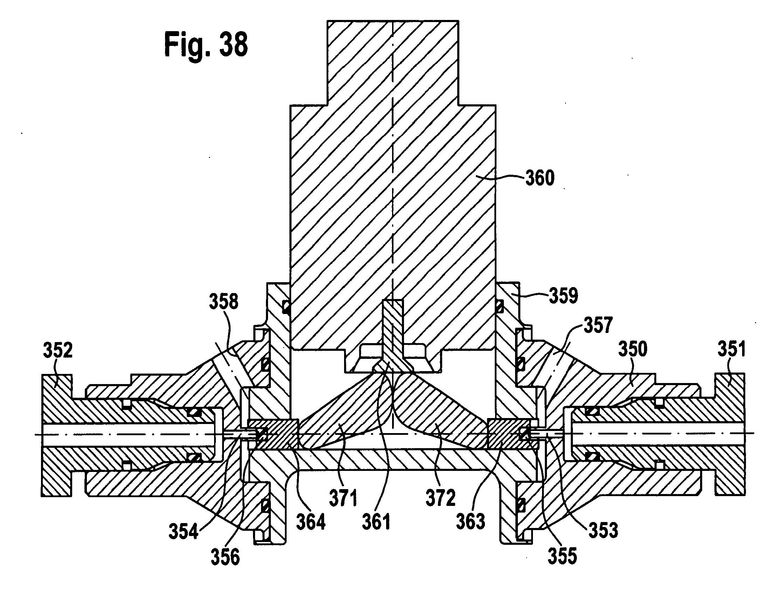

In den Figuren 38 bis 40 sind ähnliche Ausführungsbeispiele wie in Figur 37 dargestellt. Zur Bezeichnung gleicher Teile werden die gleichen Bezugszeichen verwendet. Um Wiederholungen zu vermeiden, wird auf die vorangegangene Beschreibung der Figur 37 verwiesen. Im Folgenden wird nur auf die Unterschiede zwischen den einzelnen Ausführungsbeispielen eingegangen.

Bei dem in Figur 38 dargestellten Ausführungsbeispiel sind die Dichtungsträgereinrichtungen 363 und 364 durch zwei Kopplungsarme 371 und 372 mit dem Aktorkopf 361 gekoppelt. Im Bereich des Aktorkopfs 361 liegen die Kopplungsarme 371 und 372 sowohl aneinander als auch an dem Aktorkopf 361 an.

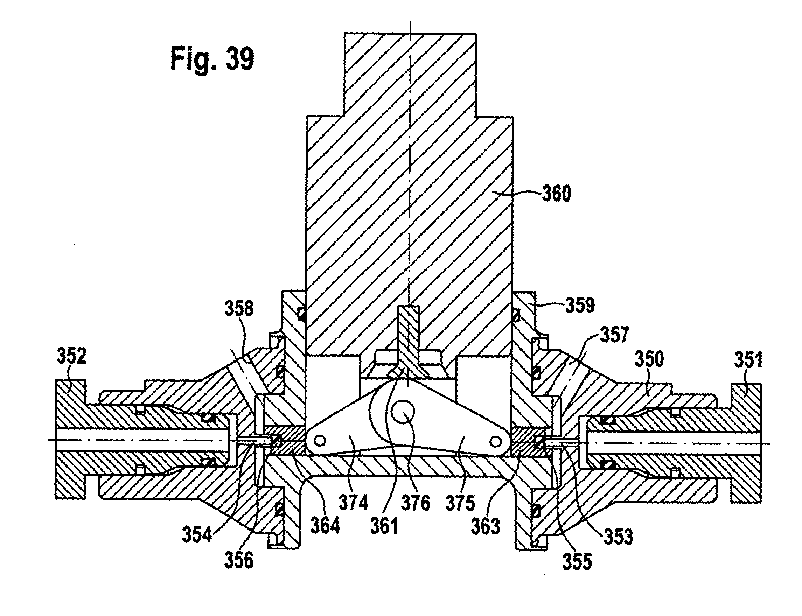

Bei dem in Figur 39 dargestellten Ausführungsbeispiel sind die Dichtungsträgereinrichtungen 363 und 364 über zwei Kopplungsarme 374 und 375 mit dem Aktorkopf 361 gekoppelt. Die Kopplungsarme 374 und 375 sind im Bereich des Aktorkopfs 361 durch ein Gelenk 376 schwenkbar miteinander verbunden.

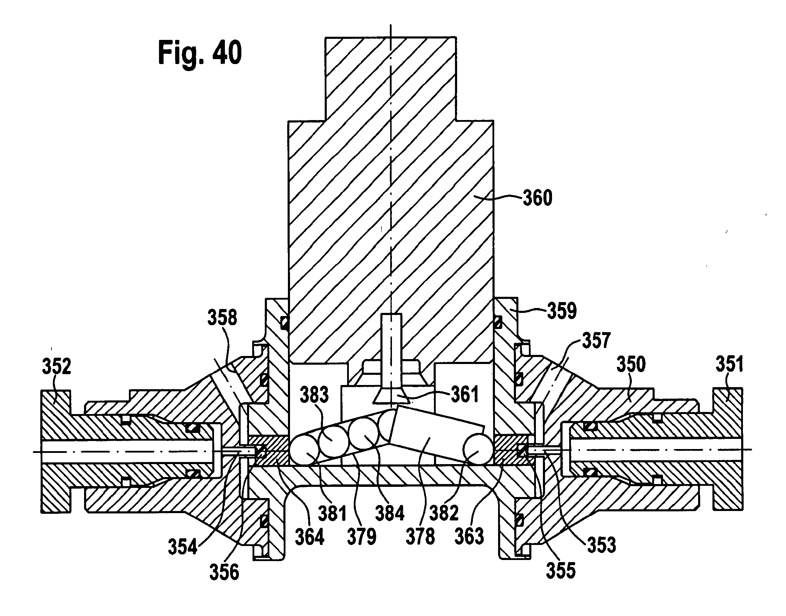

Bei dem in Figur 40 dargestellten Ausführungsbeispiel sind die Dichtungsträgereinrichtungen 363 und 364 durch zwei Kopplungsrohre 378 und 379 mit dem Aktorkopf 361 gekoppelt. In den Kopplungsrohren 378 und 379 sind Kugeln 381 bis 384 aufgenommen. Die Kugel 381 befindet sich in Anlage an der Dichtungsträgereinrichtung 364. Die Kugel 382 befindet sich in Anlage an der Dichtungsträgereinrichtung 363.

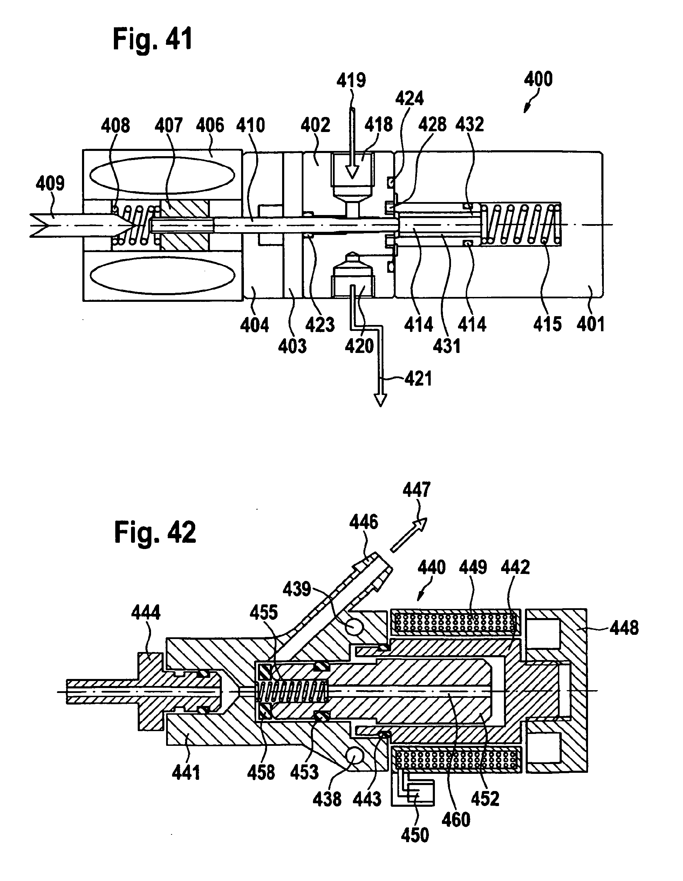

In Figur 41 ist eine Notöffnungsventileinrichtung mit einem Gehäuse 400 im Schnitt dargestellt. Das Gehäuse 400 umfasst mehrere Gehäuseabschnitte 401 bis 404. An den Gehäuseabschnitt 404 ist ein Elektromagnet 406 angebaut. Der Elektromagnet 406 weist einen Aktor 407 auf, der durch eine Öffnungsfeder 408 in Richtung eines Pfeils 409 vorgespannt ist. Der Aktor 407 ist über eine Kopplungsstange 410 mit einem Kolben 412 gekoppelt, der in dem Gehäuseabschnitt 401 hin und her bewegbar aufgenommen ist. Der Kolben 412 ist radial nach außen durch eine Dichtung 414 abgedichtet und durch eine Druckfeder 415 vorgespannt, die in einem Sackloch aufgenommen ist, das in dem Gehäuseabschnitt 401 ausgebildet ist und durch den Kolben 412 begrenzt wird.

Der Gehäuseabschnitt 402 weist einen Druckanschluss 418 für eine Druckmediumsleitung auf, die durch einen Pfeil 419 angedeutet ist. Des Weiteren weist der Gehäuseabschnitt 402 einen Druckentspannungsanschluss 420 für eine Druckentspannungsleitung auf, die durch einen Pfeil 421 angedeutet ist.

Die Kopplungsstange 410 ist radial außen zu dem Gehäuseabschnitt 403 hin durch eine Dichtung 423 abgedichtet. Zwischen den Gehäuseabschnitten 402 und 401 ist eine Dichtung 424 angeordnet. Der Kolben 412 weist an seiner dem Elektromagneten 406 zugewandten Stirnseite eine Dichtfläche auf, die an einem Dichtelement 428 zur Anlage kommen kann, um eine Verbindung zwischen dem Druckanschluss 418 und dem Druckentspannungsanschluss 420 zu unterbrechen.

Zum Öffnen der in Figur 41 dargestellten Notöffnungsventileinrichtung wird die Kopplungsstange 410, die an dem Aktor 407 befestigt sein kann, durch die Öffnungsfeder 408 gegen den Kolben 412 gedrückt, bis dieser von dem Dichtelement 428 abhebt und Druckmedium von dem Druckanschluss 418 zu dem Druckentspannungsanschluss 420 gelangt. Um die Notöffnungsventileinrichtung zu schließen, wird der Elektromagnet 406 bestromt, um den Aktor 407 zurückzuziehen. Dann trägt die Druckfeder 415 dazu bei, dass der Ventilkolben 412 gegen das Dichtungselement 428 gedrückt wird. Der Ventilkolben 412 ist mit in axialer Richtung verlaufenden Verbindungskanälen 431 und 432 ausgestattet, die den Durchtritt von Druckmedien an dem Kolben 412 vorbei in den Aufnahmerahm für die Druckfeder 415 ermöglichen. Dadurch wird sichergestellt, dass die dem Elektromagneten 406 abgewandte Stirnseite des Kolbens 412 mit Druckmedien beaufschlagt wird. Die druckbeaufschlagten Flächen an den Stirnseiten des Kolbens 412 sind so bemessen, dass nur eine geringe Magnetkraft notwendig ist, um die Notöffnungsventileinrichtung zu schließen.

In Figur 42 ist eine Notöffnungsventileinrichtung mit einem Gehäuse 440 im Schnitt dargestellt, das zwei Montagestellen 438 und 439 aufweist. Das Gehäuse 440 weist ein erstes Gehäuseteil 441 und ein zweites Gehäuseteil 442 auf. Zwischen den beiden Gehäuseteilen 441 und 442 ist eine Dichtung 443 angeordnet. Das Gehäuseteil 441 ist mit einem Druckanschluss 444 für eine Druckmediumsleitung ausgestattet. Außerdem ist das Gehäuseteil 441 mit einem Druckentspannungsanschluss 446 für eine Druckentspannungsleitung ausgestattet, die durch einen Pfeil 447 angedeutet ist.

Auf das freie Ende des Gehäuseteils 442 ist ein Befestigungskopf 448 aufgeschraubt, der zur Befestigung eines Elektromagneten 449 dient. Der Elektromagnet 449 weist einen elektrischen Anschluss 450 auf. In dem Gehäuse 440 ist ein Kolben 452 hin und her bewegbar aufgenommen, der radial nach außen zu dem Gehäuseteil 442 hin durch eine Dichtung 453 abgedichtet ist. Der Kolben 452 ist durch eine Öffnungsfeder 455 in eine Öffnungsstellung vorgespannt. In seiner Schließstellung drückt der Kolben 452 mit einer an seinem dem Druckanschluss 444 zugewandten Ende ausgebildeten Fläche gegen eine Ringdichtung 458. Dadurch wird der Durchtritt von Druckmedium vom Druckanschluss 444 zum Druckentspannungsanschluss 446 hin unterbrochen. Der Kolben 452 weist eine zentrale Durchgangsbohrung 460 auf, durch welche die dem Druckanschluss 444 abgewandte Stirnseite des Kolbens 452 mit Druckmedium beaufschlagt wird.

Durch eine geeignete Wahl der mit Druck beaufschlagten Flächen des Kolbens 452 kann die Größe der zum Schließen der Notöffnungsventileinrichtung erforderlichen Magnetkraft beeinfluss werden. Je kleiner die Differenz der druckbeaufschlagten Flächen ist, desto geringer sind die Anforderungen an die Größe der Magnetkraft. Daher ist es möglich, dass die Notöffnungsventileinrichtung hohe Drücke mit einer relativ kleinen Magnetkraft abdichten kann.

### Bezugszeichenliste

- 1.: Antriebsstrang
- 2.: Brennkraftmaschine
- 3.: Getriebe
- 4.: Getriebebetätigungseinrichtung
- 5.: Getriebeeingangswelle
- 6.: Getriebeeingangswelle
- 8.: Doppelkupplung
- 9.: Eingangsteil
- 10.: Kurbelwelle
- 11.: erste Kupplungseinrichtung
- 12.: zweite Kupplungseinrichtung
- 15.: Ausgangsteil
- 16.: Ausgangsteil
- 17.: Kupplungsscheibe
- 18.: Kupplungsscheibe
- 19.: Ringscheibenteil
- 20.: Ringscheibenteil
- 21.: Geberzylinder
- 22.: Geberzylinder
- 23.: Druckmediumsleitung
- 24.: Druckmediumsleitung
- 26.: Notöffnungsventileinrichtung
- 27.: 4/2-Wegeventil
- 28.: Elektromagnet
- 31.: Anschluss
- 32.: Anschluss
- 33.: Anschluss
- 34.: Druckentspannungsleitung
- 35: Anschluss
- 36.: Druckentspannungsleitung
- 38.: Druckentspannungsleitung
- 40.: Hydraulikspeicher
- 41.: Verbindungsleitung
- 42.: Verbindungsleitung
- 46.: Notöffnungsventileinrichtung
- 48.: 2/2-Wegeventil
- 49.: Elektromagnet
- 50.: 2/2-Wegeventil
- 51.: Elektromagnet
- 53.: Anschluss
- 54.: Anschluss
- 55.: Druckentspannungsleitung
- 57.: Anschluss
- 58.: Anschluss
- 59.: Druckentspannungsleitung
- 60.: Verbindungsleitung
- 61.: Verbindungsleitung
- 62.: Verbindungsleitung
- 64.: Hydraulikspeicher
- 65.: Verbindungsleitung
- 66.: Hydraulikspeicher
- 68.: Verbindungsleitung
- 69.: Hydraulikspeicher
- 71.: Verbindungsleitung
- 74.: Notöffnungsventileinrichtung
- 75.: Elektromagnet
- 76.: 2/2-Wegeventil
- 77.: Anschluss
- 78.: Abzweigungsleitung
- 79.: Abzweigungsleitung

- 80.: Anschluss
- 81.: Verbindungsleitung
- 83.: Rückschlagventil
- 84.: Rückschlagventil
- 86.: Rahmen
- 91.: Antriebsstrang
- 93.: Getriebe
- 94.: Getriebebetätigungseinrichtung
- 95.: Getriebeeingangswelle
- 96.: Eingangsteil
- 97.: Reibungskupplung
- 98.: Nehmerzylinder
- 100.: Druckmediumsleitung
- 102.: Geberzylinder
- 104.: Nachlaufleitung
- 105.: Hydraulikspeicher
- 107.: Druckentspannungsleitung
- 108.: Notöffnungsventileinrichtung
- 110.: 2/2-Wegeventil
- 111.: Elektromagnet
- 114.: Notöffnungsventileinrichtung
- 116.: 2/2-Wegeventil
- 117.: Elektromagnet
- 121.: Notöffnungsventileinrichtung
- 122.: Anschluss
- 123.: Anschluss
- 125.: Druckmediumseintrittsdüse
- 126.: Dichtungselement
- 128.: Dichtungsträgereinrichtung
- 130.: Elektromagnet
- 132.: Verbindungskanal
- 134.: Doppelpfeil
- 135.: Doppelpfeil
- 136.: Dichtfläche
- 137.: Dichtfläche
- 140.: Pfeil
- 141.: Ventilkugel
- 142.: Aktorelement
- 146.: Druckmediumseintrittsdüse
- 148.: O-Ringdichtung
- 149.: Sackloch
- 150.: Dichtungsträgereinrichtung
- 151.: Bereich
- 153.: Dichtelement
- 154.: Dichtungsträgereinrichtung
- 156.: Pfeil
- 157.: Pfeil
- 158.: Bereich
- 159.: Bereich
- 160.: Dichtelement
- 161.: Dichtungsträgereinrichtung
- 164.: Druckmediumseintrittsdüse
- 167.: Bereich
- 168.: Dichtelement
- 169.: Dichtungsträgereinrichtung
- 170.: Verschluss
- 175.: Gehäuse
- 176.: Dichtung
- 180.: Elektromagnet
- 181.: elektrischer Anschluss
- 182.: Pfeile
- 183.: Gehäuse
- 184.: Dichtung
- 185.: Druckmediumseintrittsdüsen
- 186.: Druckmediumseintrittsdüsen
- 187.: Pfeil
- 188.: Pfeil
- 190.: Pfeil
- 192.: Dichtungsträger
- 195.: Dichtelement
- 196.: Dichtelement
- 201.: Dichtungsträgereinrichtung
- 202.: Dichtungsträgereinrichtung
- 204.: Gehäuse
- 205.: Druckanschluss
- 206.: Pfeil
- 208.: Anschluss für Druckentspannungsleitung
- 209.: Pfeil
- 210.: Druckanschluss
- 211.: Pfeil
- 214.: Ventilkolben
- 215.: Dichtelement
- 216.: Dichtelement
- 218.: Elektromagnet
- 219.: Durchgangskanal
- 220.: Druckmediumseintrittsdüse
- 221.: Dichtelement
- 222.: Dichtungsträger
- 224.: Dichtelement
- 225.: Druckmediumseintrittsdüse
- 230.: Gehäuse
- 231.: Deckel
- 232.: Dichtung
- 233.: Dichtung
- 234.: Elektromagnet
- 236.: Druckanschluss
- 237.: Rücklaufanschluss
- 238.: Druckmediumseintrittsdüse
- 239.: Dichtelement
- 240.: Dichtungsträger
- 241.: Schraubendruckfeder
- 242.: Ende
- 243.: Betätigungsbolzen
- 244.: Druckfeder
- 245.: Pfeil
- 250.: Aufnahmeraum
- 251.: Ende
- 252.: Aktor
- 254.: Schraubendruckfeder
- 260.: Gehäuse
- 261.: Schraube
- 262.: Schraube
- 263.: Dichtung
- 264.: Elektromagnet
- 265.: elektrischer Anschluss
- 266.: Aktor
- 267.: Mutter
- 270.: Dichtungsträger
- 271.: Dichtelement
- 272.: Dichtelement
- 274.: Druckmediumseintrittsdüse
- 275.: Druckmediumseintrittsdüse
- 276.: Pfeil
- 277.: Pfeil
- 279.: Druckentspannungskanal
- 280.: Pfeil
- 281.: Dichtung
- 282.: Gehäuse
- 283.: Deckel
- 284.: Druckanschluss
- 285.: Druckmediumseintrittsdüse
- 287.: Druckentspannungsanschluss
- 289.: Dichtelement
- 290.: Dichtungsträger
- 291.: Lagerstelle
- 292.: Ende
- 294.: Aktor
- 295.: Elektromagnet
- 296.: Dichtung
- 297.: Druckanschluss
- 298.: Dichtelement
- 300.: Gehäuse
- 301.: Druckanschluss
- 302.: Druckanschluss
- 303.: Druckentspannungsanschluss
- 304.: Elektromagnet
- 305.: Aktor
- 306.: Pfeil
- 308.: Keileinrichtung
- 309.: Pfeil
- 310.: Pfeil
- 311.: Dichtungsträger
- 312.: Dichtungsträger
- 313.: Dichtungselement
- 314.: Dichtungselement
- 315.: Druckmediumseintrittsdüse
- 316.: Druckmediumseintrittsdüse
- 321.: Gehäuse
- 322.: Dichtung
- 323.: Deckel
- 325.: Pfeil
- 326.: Pfeil
- 327.: Druckmediumseintrittsdüse
- 328.: Druckmediumseintrittsdüse
- 329.: Dichtungselement
- 330.: Dichtungselement
- 331.: Druckentspannungsanschluss
- 332.: Pfeil
- 334.: Dichtungsträger
- 335.: Innengewindeelement
- 336.: Doppelpfeil
- 338.: Außengewindeelement
- 339.: freies Ende
- 340.: Hebelarm
- 341.: Aktorelement
- 342.: Elektromagnet
- 343.: Anschluss
- 344.: Pfeil
- 346.: Pfeil
- 350.: Gehäuseteil
- 351.: Druckanschluss
- 352.: Druckanschluss
- 353.: Druckmediumseintrittsdüse
- 354.: Druckmediumseintrittsdüse
- 355.: Dichtelement
- 356.: Dichtelement
- 357.: Druckentspannungsanschluss
- 358.: Druckentspannungsanschluss
- 359.: Gehäuseteil
- 360.: Linearmagnet
- 361.: Aktorkopf
- 362.: Kopplungselement
- 363.: Dichtungsträgereinrichtung
- 364.: Dichtungsträgereinrichtung
- 371.: Kopplungsarm
- 372.: Kopplungsarm
- 374.: Kopplungsarm
- 375.: Kopplungsarm
- 376.: Gelenk
- 378.: Kopplungsrohr
- 379.: Kopplungsrohr
- 381.: Kugel
- 382.: Kugel
- 383.: Kugel
- 384.: Kugel
- 400.: Gehäuse
- 401.: Gehäuseabschnitt
- 402.: Gehäuseabschnitt
- 403.: Gehäuseabschnitt
- 404.: Gehäuseabschnitt
- 406.: Elektromagnet
- 407.: Aktor
- 408.: Öffnungsfeder
- 409.: Pfeil
- 410.: Kopplungsstange
- 412.: Kolben
- 414.: Dichtung
- 415.: Druckfeder
- 418.: Druckanschluss
- 419.: Pfeil
- 420.: Druckentspannungsanschluss
- 421.: Pfeil
- 423.: Dichtung
- 424.: Dichtung
- 428.: Dichtelement
- 431.: Verbindungskanal
- 432.: Verbindungskanal
- 438.: Montagestelle
- 439.: Montagestelle
- 440.: Gehäuse
- 441.: Gehäuseteil
- 442.: Gehäuseteil
- 443.: Dichtung
- 444.: Druckanschluss
- 446.: Druckentspannungsanschluss
- 447.: Pfeil
- 448.: Befestigungskopf
- 449.: Elektromagnet
- 450.: elektrischer Anschluss
- 452.: Kolben
- 453.: Dichtung
- 455.: Öffnungsfeder
- 458.: Ringdichtung
- 460.: Durchgangsbohrung

## Patentansprüche

1. Hydraulisches Kupplungsbetätigungssystem mit einer hydraulischen Kupplungsbetätigungseinrichtung, die mindestens einen Kupplungsgeberzylinder (102) aufweist, der über eine Druckmediumsleitung (100) mit einem Kupplungsnehmerzylinder (98) in Verbindung steht, der dazu dient, eine Kupplungseinrichtung (97) zu betätigen, wobei der Druck in der Druckmediumsleitung (100) über mindestens eine Notöffnungsventileinrichtung (108;114) entspannbar ist, um in einem Notfall ein Öffnen der Kupplungseinrichtung (97) zu ermöglichen, **dadurch gekennzeichnet, dass** die Notöffnungsventileinrichtung (108;114) eine Dichtungsträgereinrichtung (128) mit einem Dichtungselement (126) umfasst, die mit Hilfe eines Elektromagneten (130) aus einer Öffnungsstellung, in der eine Druckmediumseintrittsöffnung (125) geöffnet ist, in eine Schließstellung bewegbar ist, in der das Dichtungselement (126) die Druckmediumseintrittsöffnung (125) verschließt.

2. Hydraulisches Kupplungsbetätigungssystem nach Anspruch 1, **dadurch gekennzeichnet, dass** die Dichtungsträgereinrichtung (128) ein Sackloch aufweist, das zur Aufnahme des Dichtungselements (126) dient und dessen Innendurchmesser größer als der Außendurchmesser einer Druckmediumseintrittsdüse (125) ist.

3. Hydraulisches Kupplungsbetätigungssystem nach einem der vorhergehenden Ansprüche, **dadurch gekennzeichnet, dass** die Dichtungsträgereinrichtung (240) mit Hilfe eines Elektromagneten (234) aus der Öffnungsstellung in die Schließstellung kippbar ist.

4. Hydraulisches Kupplungsbetätigungssystem nach Anspruch 1 oder 2, **dadurch gekennzeichnet, dass** in die Dichtungsträgereinrichtung (128) eine Druckbegrenzungsventileinrichtung integriert ist.

5. Hydraulisches Kupplungsbetätigungssystem nach Anspruch 1 oder 2, **dadurch gekennzeichnet, dass** zwischen der Dichtungsträgereinrichtung (270) und dem Elektromagneten (264) eine Gewindeeinrichtung (267) angeordnet ist, mit der eine Drehbewegung des Elektromagneten (264) in eine translatorische Bewegung der Dichtungsträgereinrichtung (270) umgewandelt wird.

6. Hydraulisches Kupplungsbetätigungssystem nach Anspruch 1 oder 2, **dadurch gekennzeichnet, dass** die Dichtungsträgereinrichtung (270) von einer Hebeleinrichtung gebildet wird.

7. Hydraulisches Kupplungsbetätigungssystem nach Anspruch 1 oder 2, **dadurch gekennzeichnet, dass** die Dichtungsträgereinrichtung (334) mit einer Hebeleinrichtung (340) zusammenwirkt, die zwischen dem Elektromagneten (342) und der Dichtungsträgereinrichtung (334) wirksam ist.

8. Hydraulisches Kupplungsbetätigungssystem nach Anspruch 1 oder 2, **dadurch gekennzeichnet, dass** die Dichtungsträgereinrichtung (311,312) mit einer Keileinrichtung (308) zusammenwirkt, die zwischen dem Elektromagneten (304) und der Dichtungsträgereinrichtung (311,312) wirksam ist.

9. Hydraulisches Kupplungsbetätigungssystem nach Anspruch 1 oder 2, **dadurch gekennzeichnet, dass** die Dichtungsträgereinrichtung (363,364) mit einer elastischen Kopplungseinrichtung (362) zusammenwirkt, die zwischen dem Elektromagneten (360) und der Dichtungsträgereinrichtung (363,364) wirksam ist.

10. Hydraulisches Kupplungsbetätigungssystem mit einer hydraulischen Kupplungsbetätigungseinrichtung, die einen ersten Kupplungsgeberzylinder (21), der über eine erste Druckmediumsleitung (23) mit einem ersten Kupplungsnehmerzylinder in Verbindung steht, der dazu dient, eine erste Kupplungseinrichtung (11) zu betätigen, und einen zweiten Kupplungsgeberzylinder (22) umfasst, der über eine zweite Druckmediumsleitung (24) mit einem zweiten Kupplungsnehmerzylinder in Verbindung steht, der dazu dient, eine zweite Kupplungseinrichtung (12) zu betätigen, wobei der Druck in der ersten und/oder in der zweiten Druckmediumsleitung (23,24) über mindestens eine Notöffnungsventileinrichtung, wie sie in den vorangegangenen Ansprüchen offenbart ist, entspannbar ist, um in einem Notfall ein Öffnen mindestens einer der Kupplungseinrichtungen (11,12) zu ermöglichen.

## Claims

1. Hydraulic clutch actuating system having a hydraulic clutch actuating device which has at least one clutch master cylinder (102) which is connected by means of a pressure medium line (100) to a clutch slave cylinder (98) which serves to actuate a clutch device (97), with it being possible for the pressure in the pressure medium line (100) to be released by means of at least one emergency opening valve device (108;114) in order to permit an opening of the clutch device (97) in an emergency, **characterized in that** the emergency opening valve device (108; 114) comprises a seal carrier device (128) with a sealing element (126) which can, by means of an electromagnet (130), be moved from an open position, in which a pressure medium inlet opening (125) is open, into a closed position, in which the sealing element (126) closes off the pressure medium inlet opening (125).

2. Hydraulic clutch actuating system according to Claim 1, **characterized in that** the seal carrier device (128) has a blind hole which serves for holding the sealing element (126) and whose inner diameter is larger than the outer diameter of a pressure medium inlet nozzle (125).

3. Hydraulic clutch actuating system according to one of the preceding claims, **characterized in that** the seal carrier device (240) can be tilted by means of an electromagnet (234) from the open position into the closed position.

4. Hydraulic clutch actuating system according to Claim 1 or 2, **characterized in that** a pressure limiting valve device is integrated in the seal carrier device (128).

5. Hydraulic clutch actuating system according to Claim 1 or 2, **characterized in that** a thread device (267) is arranged between the seal carrier device (270) and the electromagnet (264), by means of which thread device (267) a rotational movement of the electromagnet (264) is converted into a translatory movement of the seal carrier device (270).

6. Hydraulic clutch actuating system according to Claim 1 or 2, **characterized in that** the seal carrier device (270) is formed by a lever device.

7. Hydraulic clutch actuating system according to Claim 1 or 2, **characterized in that** the seal carrier device (334) interacts with a lever device (340) which acts between the electromagnet (342) and the seal carrier device (334).

8. Hydraulic clutch actuating system according to Claim 1 or 2, **characterized in that** the seal carrier device (311, 312) interacts with a wedge device (308) which acts between the electromagnet (304) and the seal carrier device (311, 312).

9. Hydraulic clutch actuating system according to Claim 1 or 2, **characterized in that** the seal carrier device (363, 364) interacts with an elastic coupling device (362) which acts between the electromagnet (360) and the seal carrier device (363, 364).

10. Hydraulic clutch actuating system having a hydraulic clutch actuating device which comprises a first clutch master cylinder (21) which is connected by means of a first pressure medium line (23) to a first clutch slave cylinder which serves to actuate a first clutch device (11), and a second clutch master cylinder (22) which is connected by means of a second pressure medium line (24) to a second clutch slave cylinder which serves to actuate a second clutch device (12) with it being possible for the pressure in the first and/or in the second pressure medium line (23, 24) to be released by means of at least one emergency opening valve device as disclosed in the preceding claims in order to permit an opening of at least one of the clutch devices (11, 12) in an emergency.

## Revendications

1. Système de commande d'accouplement hydraulique comprenant un dispositif de commande d'accouplement hydraulique qui présente au moins un maître-cylindre d'accouplement (102) qui est en liaison par le biais d'une conduite à fluide sous pression (100) avec un cylindre récepteur d'accouplement (98), lequel sert à actionner un dispositif d'accouplement (97), la pression dans la conduite à fluide sous pression (100) pouvant être détendue par le biais d'au moins un dispositif à vanne d'ouverture d'urgence (108 ; 114) pour permettre une ouverture du dispositif d'accouplement (97) en cas d'urgence, **caractérisé en ce que** le dispositif à vanne d'ouverture d'urgence (108 ; 114) comprend un dispositif porte-joint (128) muni d'un élément d'étanchéité (126) qui, à l'aide d'un électroaimant (130) peut être déplacé d'une position d'ouverture, dans laquelle est ouverte une ouverture d'entrée de fluide sous pression (125), dans une position de fermeture, dans laquelle l'élément d'étanchéité (126) ferme l'ouverture d'entrée de fluide sous pression (125).

2. Système de commande d'accouplement hydraulique selon la revendication 1, **caractérisé en ce que** le dispositif porte-joint (128) présente un trou borgne qui sert à accueillir l'élément d'étanchéité (126) et dont le diamètre intérieur est supérieur au diamètre extérieur d'une buse d'entrée de fluide sous pression (125).

3. Système de commande d'accouplement hydraulique selon l'une des revendications précédentes, **caractérisé en ce que** le dispositif porte-joint (240) peut basculer de la position d'ouverture vers la position de fermeture à l'aide d'un électroaimant (234).

4. Système de commande d'accouplement hydraulique selon la revendication 1 ou 2, **caractérisé en ce qu'**un dispositif à limiteur de pression est intégré dans le dispositif porte-joint (128).

5. Système de commande d'accouplement hydraulique selon la revendication 1 ou 2, **caractérisé en ce qu'**entre le dispositif porte-joint (270) et l'électroaimant (264) est disposé un dispositif à filet (267) avec lequel un mouvement de rotation de l'électroaimant (264) est converti en un mouvement translatoire du dispositif porte-joint (270).

6. Système de commande d'accouplement hydraulique selon la revendication 1 ou 2, **caractérisé en ce que** le dispositif porte-joint (270) est formé par un dispositif à levier.

7. Système de commande d'accouplement hydraulique selon la revendication 1 ou 2, **caractérisé en ce que** le dispositif porte-joint (334) interagit avec un dispositif à levier (340) qui agit entre l'électroaimant (304) et le dispositif porte-joint (334).

8. Système de commande d'accouplement hydraulique selon la revendication 1 ou 2, **caractérisé en ce que** le dispositif porte-joint (311, 312) interagit avec un dispositif à clavette (308) qui agit entre l'électroaimant (304) et le dispositif porte-joint (311, 312).

9. Système de commande d'accouplement hydraulique selon la revendication 1 ou 2, **caractérisé en ce que** le dispositif porte-joint (363, 364) interagit avec un dispositif d'accouplement élastique (362) qui agit entre l'électroaimant (360) et le dispositif porte-joint (363, 364).

10. Système de commande d'accouplement hydraulique comprenant un dispositif de commande d'accouplement hydraulique, lequel présente un premier maître-cylindre d'accouplement (21) qui est en liaison par le biais d'une première conduite à fluide sous pression (23) avec un premier cylindre récepteur d'accouplement, lequel sert à actionner un premier dispositif d'accouplement (11), et un deuxième maître-cylindre d'accouplement (22) qui est en liaison par le biais d'une deuxième conduite à fluide sous pression (24) avec un deuxième cylindre récepteur d'accouplement, lequel sert à actionner un deuxième dispositif d'accouplement (12), la pression dans la première et/ou la deuxième conduite à fluide sous pression (23, 24) pouvant être détendue par le biais d'au moins un dispositif à vanne d'ouverture d'urgence tel qu'il est divulgué dans les revendications précédentes pour permettre, en cas d'urgence, une ouverture d'au moins l'un des dispositifs d'accouplement (11, 12).
